# EUROPEAN PATENT APPLICATION

(11) **EP 2 975 528 A1**
(43) Date of publication of application: **20.01.2016**
(21) Application number: 15176865.2
(22) Date of filing: 15.07.2015
(51) Int. Cl.: G06F 13/16

(54) **ELECTRONIC DEVICE AND METHOD FOR MANAGING MEMORY OF ELECTRONIC DEVICE**

(30) Priority: 15.07.2014 KR 20140089268
(71) Applicant: Samsung Electronics Co., Ltd, Gyeonggi-do 443-742 (KR)
(72) Inventor: Yun, Sunghwan, 443-742 Gyeonggi-do (KR); Kim, Seijin, 443-742 Gyeonggi-do (KR)
(74) Representative: Nederlandsch Octrooibureau

(57) **Abstract**

A method for managing a memory of an electronic device is provided. The method includes the operations of analyzing data to be stored, determining a memory to store a part or all of the data based on a type of a first memory, a type of a second memory, and a preset policy, and storing a part or all of the data in the determined memory.

## Description

### TECHNICAL FIELD

The present disclosure relates to a method for managing the memory of an electronic device, which includes a heterogeneous memory, and an electronic device including the method.

### BACKGROUND

Recently developed electronic devices, such as a smart phone, a tablet personal computer (PC), a portable multimedia player (PMP), a personal digital assistant (PDA), a laptop PC, and a wearable device, can perform various functions, besides mobility, such as gaming, a social network service (SNS), the Internet, and capturing and displaying multimedia images moving images.

Such an electronic device consumes a low level of power such that it can be carried for a long time, and may include a processor and a memory device for implementing functions (e.g. gaming, moving image playback). Various types of interfaces between the memory device and the processor, which are included in the electronic device, are being studied to implement both low power consumption and high performance.

For example, an electronic device may include at least one heterogeneous memory in order to implement both low power consumption and high performance.

Methods of the related art for accessing a memory interface by a processor include uniform memory access (UMA) and non-UMA (NUMA). The UMA method evenly distributes resources to memories regardless of the characteristics and purpose of the resources.

The above information is presented as background information only to assist with an understanding of the present disclosure. No determination has been made, and no assertion is made, as to whether any of the above might be applicable as prior art with regard to the present disclosure.

### SUMMARY

Memory management methods of the related art do not support management of heterogeneous memory devices that have different characteristics. Memory management methods of the related art just allocate a free space, among the entire memory space, in response to a memory allocation request. The free space refers to a space that is not used, among the entire memory space. Therefore, according to memory management methods of the related art, memory allocation cannot be performed without selecting a specific memory device from heterogeneous memory devices.

Aspects of the present disclosure are to address at least the above-mentioned problems and/or disadvantages and to provide at least the advantages described below. Accordingly, an aspect of the present disclosure is to provide a method for managing memories of an electronic device, which includes heterogeneous memories, such that data can be distributed to the heterogeneous memories according to the data type and purpose.

In accordance with an aspect of the present disclosure, a method for managing a memory of an electronic device is provided. The method includes the operations of analyzing data to be stored, determining a memory to store a part or all of the data based on a type of a first memory, a type of a second memory, and a preset policy, and storing a part or all of the data in the determined memory.

In accordance with another aspect of the present disclosure, a method for managing a memory of an electronic device is provided. The method includes the operations of determining memory information associated with a first memory and a second memory and configuring zone information for three or more zones to be allocated to the first memory and the second memory based on the memory information.

In accordance with another aspect of the present disclosure, a method for managing a memory of an electronic device is provided. The method includes the operations of recognizing an added memory inserted into the electronic device, accessing a zone configuration policy, determining a zone to be allocated to the added memory based on the zone configuration policy and a memory information, and configuring zone information based on the determination.

In accordance with another aspect of the present disclosure, an electronic device is provided. The electronic device includes a memory and a controller configured to analyze data to be stored, determine a memory to store a part or all of the data based on a type of a first memory, a type of a second memory, and a preset policy, and store a part or all of the data in determined memory.

In accordance with another aspect of the present disclosure, an electronic device is provided. The electronic device includes a first memory, a slot configured to receive a second memory, and a controller configured to determine memory information associated with the first and second memories and to configure zone information regarding three or more zones to be allocated to the first and second memories based on the memory information.

In accordance with another aspect of the present disclosure, an electronic device is provided. The electronic device includes a first memory and a controller configured to recognize a second memory added to the electronic device, access a zone configuration policy, determine a zone to be allocated to the second memory based on the zone configuration policy and a memory information, and configure zone information based on a result of the determination.

The present disclosure distributes resources to heterogeneous memories according to resource characteristics and purpose, thereby optimizing the ratio of use of the heterogeneous memories included in an electronic device.

In addition, the present disclosure distributes resources to heterogeneous memories according to resource characteristics and purpose, thereby improving the execution performance of the electronic device.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a diagram of network environment including an electronic device according to various embodiments of the present disclosure;
FIG. 2 is a block diagram of an electronic device according to various embodiments of the present disclosure;
FIG. 3 is a diagram illustrating a communication protocol between electronic devices according to various embodiments of the present disclosure;
FIG. 4 is a block diagram illustrating an electronic device memory management system according to various embodiments of the present disclosure;
FIG. 5 is a flowchart for performing an electronic device memory management method according to various embodiments of the present disclosure;
FIG. 6 is a diagram of an electronic device memory management method according to various embodiments of the present disclosure;
FIG. 7 is a diagram of an electronic device memory management method according to various embodiments of the present disclosure;
FIG. 8 is a diagram of an electronic device memory management method according to various embodiments of the present disclosure;
FIG. 9 is a diagram illustrating a connection structure between a heterogeneous memory and a processor according to various embodiments of the present disclosure;
FIG. 10 is a diagram illustrating a memory stacking structure according to various embodiments of the present disclosure;
FIG. 11 is a flowchart for performing a zone setting method according to various embodiments of the present disclosure;
FIG. 12 is a diagram illustrating memory information according to various embodiments of the present disclosure;
FIG. 13 is a diagram illustrating a zone structure according to various embodiments of the present disclosure;
FIG. 14 is a diagram illustrating zone information according to various embodiments of the present disclosure;
FIG. 15 is a flowchart for performing a zone setting method according to various embodiments of the present disclosure;
FIG. 16 is a diagram illustrating a zone configuration policy table according to various embodiments of the present disclosure;
FIG. 17 is a block diagram illustrating the configuration of an application processor according to various embodiments of the present disclosure; and
FIG. 18 is a flowchart for performing an electronic device memory management method according to various embodiments of the present disclosure.

Throughout the drawings, it should be noted that like reference numbers are used to depict the same or similar elements, features, and structures

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

An electronic apparatus according to the present disclosure may be an apparatus having a communication function. For example, the electronic device according to the present disclosure may be at least one of and/or combinations of a smart phone, a tablet personal computer (PC), a mobile phone, a video phone, an electronic-book (e-book) reader, a desktop PC, a laptop PC, a netbook computer, a personal digital assistant (PDA), a portable multimedia player (PMP), an MP3 player, a mobile medical appliance, an electronic bracelet, an electronic necklace, an electronic accessory, a camera, a wearable device, an electronic clock, a wrist watch, home appliances, e.g. a refrigerator, an air conditioner, a cleaner, an oven, a microwave oven, a washing machine, an air cleaner, and the like, an artificial intelligence robot, a television, a digital versatile disc (DVD) player, an audio player, various medical appliances, e.g. a magnetic resonance angiography (MRA) device, a magnetic resonance imaging (MRI) device, a computerized tomography (CT) device, an ultrasonography device and the like, a navigation device, a global positioning system (GPS) receiver, an event data recorder (EDR), a flight data recorder (FDR), a set-top box, a television (TV) box, e.g. HomeSync™ of SAMSUNG Electronics, Co., Apple TV™, and Google TV™, Co., an electronic dictionary, an infotainment device for a vehicle, an electronic equipment for a ship, e.g. a navigation device, a gyrocompass, etc., an avionic device, a security device, an electronic cloth, an electronic key, a camcorder, a game console, a head-mounted display (HMD) unit, a flat panel display device, an electronic frame, an electronic album, a piece of furniture having a communication function and/or a part of a building/structure, an electronic board, an electronic signature receiving device, and a protector. It is obvious to those skilled in the art that the electronic device according to the present disclosure is not limited to the aforementioned devices.

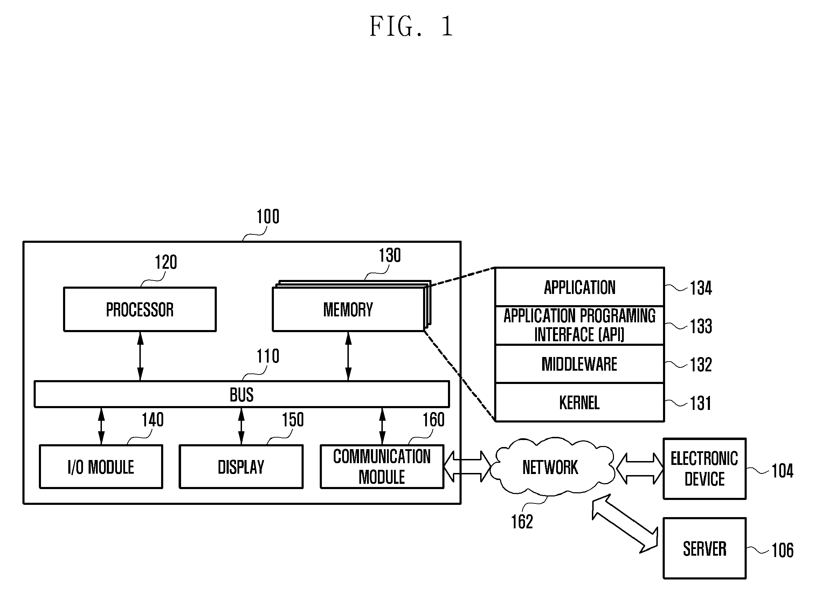

FIG. 1 is a diagram of network environment including an electronic device according to an embodiment of the present disclosure.

Referring to FIG. 1, the electronic apparatus 100 may include a bus 110, a processor 120, a memory 130, an input/output (I/O) module 140, a display module 150, and a communication module 160.

The bus 110 may be a circuit for interconnecting elements described above and for allowing a communication, e.g. by transferring a control message, between the elements described above.

The processor 120 can receive commands from the above-mentioned other elements, e.g. the memory 130, the I/O module 140, the display module 150, and the communication module 160, through, for example, the bus 110, can decode the received commands, and perform operations and/or data processing according to the decoded commands.

The memory 130 can store commands received from the processor 120 and/or other elements, e.g. the I/O module 140, the display module 150, and the communication module 160, and/or commands and/or data generated by the processor 120 and/or other elements. The memory 130 may include programming modules, such as a kernel 131, middleware 132, an application programming interface (API) 133, and an application 134. Each of the programming modules described above may be configured by software, firmware, hardware, and/or combinations of two or more thereof.

The kernel 131 controls or manages system resources (for example, the bus 110, the processor 120, or the memory 130) that are used for executing an operation or function implemented by any programming modules, for example, the middleware 132, the API 133, or the application 134. Further, the kernel 131 provides an interface for accessing individual components of the electronic device 101 from the middleware 132, the API 133, or the application 134 to control or manage the components.

The middleware 132 performs a relay function of allowing the API 133 or the application 134 to communicate with the kernel 131 to exchange data. Further, in operation requests received from the application 134, the middleware 132 performs operation requests (for example, scheduling or load balancing) by using a method of assigning a priority, by which system resources (for example, the bus 110, the processor 120, the memory 130 and the like) of the electronic device 101 can be used, to the application 134.

The API 133 is an interface by which the application 134 can control a function provided by the kernel 131 or the middleware 132 and includes, for example, at least one interface or function (for example, command) for file control, window control, image processing, or character control.

According to various embodiments of the present disclosure, the application 134 may include a short message service (SMS)/multimedia messaging service (MMS) application, an email application, a calendar application, an alarm application, a health care application (for example, application measuring quantity of exercise or blood sugar) or an environment information application (for example, application providing information on barometric pressure, humidity or temperature). Additionally or alternatively, the application 134 may be an application related to an information exchange between the electronic device 100 and an external electronic device (for example, electronic device 104). The application related to the information exchange may include, for example, a notification relay application for transferring particular information to the external electronic device or a device management application for managing the external electronic device.

For example, the notification relay application may include transmitting notification information generated by another application (for example, an SMS/MMS application, an email application, a health care application or an environment information application) of the electronic device 100 to the external electronic device (for example, electronic device 104). Additionally or alternatively, the notification relay application may receive notification information from, for example, the external electronic device 104 and provide the received notification information to the user. The device management application may manage (for example, install, remove, or update) at least a part of functions (for example, turning on/off the external electronic device, turning on/off some components of the external electronic device, or controlling a brightness of the display) of the external electronic device 104 communicating with the electronic device 100, an application executed in the external electronic device 104, or a service (for example, call service or message service) provided by the external electronic device 104.

According to various embodiments of the present disclosure, the application 134 may be designated according to an attribute (for example, type of electronic device) of the external electronic device 104. For example, when the external electronic device 104 is an MP3 player, the application 134 may include an application related to music reproduction. Similarly, when the external electronic device 104 is a mobile medical device, the application 134 may include an application related to health care. According to an embodiment of the present disclosure, the application 134 may include at least one of an application designated to the electronic device 101 and an application received from an external electronic device (for example, server 106 or electronic device 104).

The I/O module 140 transmits a command or data input from the user through an input/output (I/O) device (for example, a sensor, a keyboard, or a touch screen) to the processor 120, the memory 130, or the communication module 160 through, for example, the bus 110. For example, the I/O module 140 may provide data on a user's touch input through a touch screen to the processor 120. Further, the I/O module 140 may output a command or data received through, for example, the bus 110, from the processor 120, the memory 130, or the communication module 160 through the I/O module (for example, a speaker or a display). For example, the I/O module 140 may output voice data processed through the processor 120 to the user through the speaker (not shown).

The display 150 displays various pieces of information (for example, multimedia data, text data, or the like) for the user.

The communication module 160 enables communication between the electronic device 100 and the external device (for example, electronic device 104 or server 106). For example, the communication module 160 may access a network 162 through wireless or wired communication to communicate with the external device. The wireless communication includes at least one of, for example, Wi-Fi, Bluetooth™ (BT), near field communication (NFC), a GPS, and cellular communication (for example, long term evolution (LTE), LTE-advanced (LTE-A), code division multiple access (CDMA), wideband CDMA (WCDMA), universal mobile telecommunications system (UMTS), wireless broadband (WiBro) or global system for mobile communications (GSM)). The wired communication may include at least one of, for example, a universal serial bus (USB), a high definition multimedia interface (HDMI), recommended standard 232 (RS-232), and a plain old telephone service (POTS).

According to an embodiment of the present disclosure, the network 162 may be a telecommunication network. The telecommunication network includes at least one of a computer network, Internet, Internet of things, and a telephone network. According to an embodiment of the present disclosure, a protocol (for example, transport layer protocol, data link layer protocol, or physical layer protocol) for communication between the electronic device 100 and the external device may be supported by at least one of the application 134, the API 133, the middleware 132, the kernel 131, and the communication module 160.

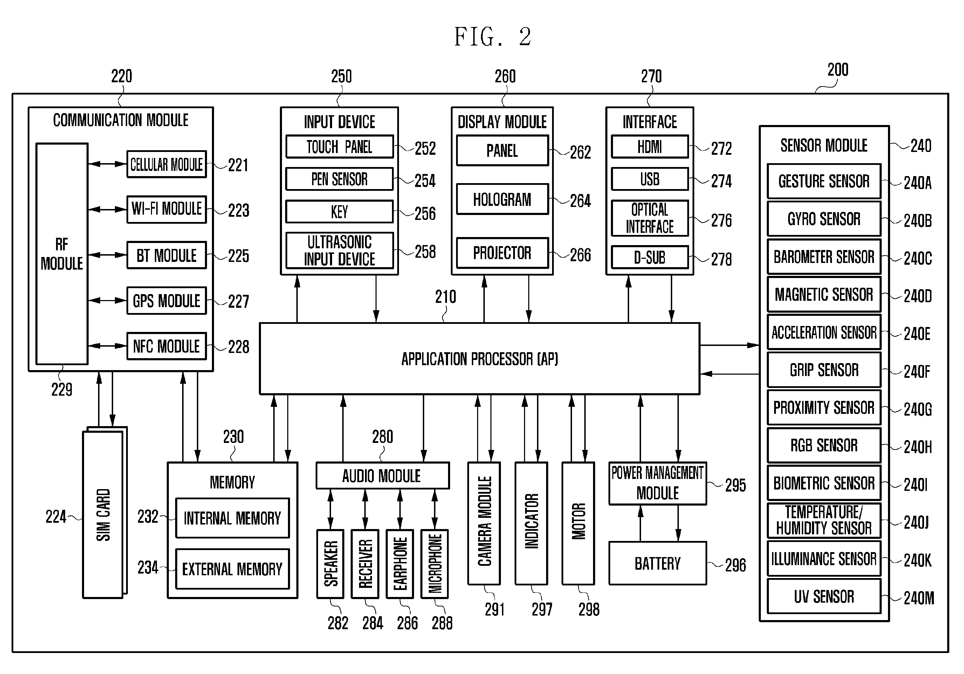

FIG. 2 is a block diagram of an electronic device according to various embodiments of the present disclosure.

Referring to FIG. 2, the electronic device 200 may configure, for example, a whole or a part of the electronic device 100 illustrated in FIG. 1. The electronic device 200 includes one or more application processors (APs) 210, a communication module 220, a subscriber identification module (SIM) card 224, a memory 230, a sensor module 240, an input device 250, a display 260, an interface 270, an audio module 280, a camera module 291, a power managing module 295, a battery 296, an indicator 297, and a motor 298.

The AP 210 operates an operating system (OS) or an application program to control hardware or software component elements connected to the AP 210 and execute various data processing and calculations including multimedia data. The AP 210 may be implemented by, for example, a system on chip (SoC). According to an embodiment of the present disclosure, the processor 210 may further include a graphic processing unit (GPU).

The communication module 220 (for example, communication interface 160) transmits/receives data in communication between different electronic devices (for example, the electronic device 104 and the server 106) connected to the electronic device 200 through a network. According to an embodiment of the present disclosure, the communication module 220 includes a cellular module 221, a Wi-Fi module 223, a BT module 225, a GPS module 227, an NFC module 228, and a radio frequency (RF) module 229.

The cellular module 221 provides a voice, a call, a video call, an SMS, or an Internet service through a communication network (for example, LTE, LTE-A, CDMA, WCDMA, UMTS, WiBro, GSM or the like). Further, the cellular module 221 may distinguish and authenticate electronic devices within a communication network by using a SIM (for example, the SIM card 224). According to an embodiment of the present disclosure, the cellular module 221 performs at least some of the functions which can be provided by the AP 210. For example, the cellular module 221 may perform at least some of the multimedia control functions.

According to an embodiment of the present disclosure, the cellular module 221 may include a communication processor (CP). Further, the cellular module 221 may be implemented by, for example, an SoC.

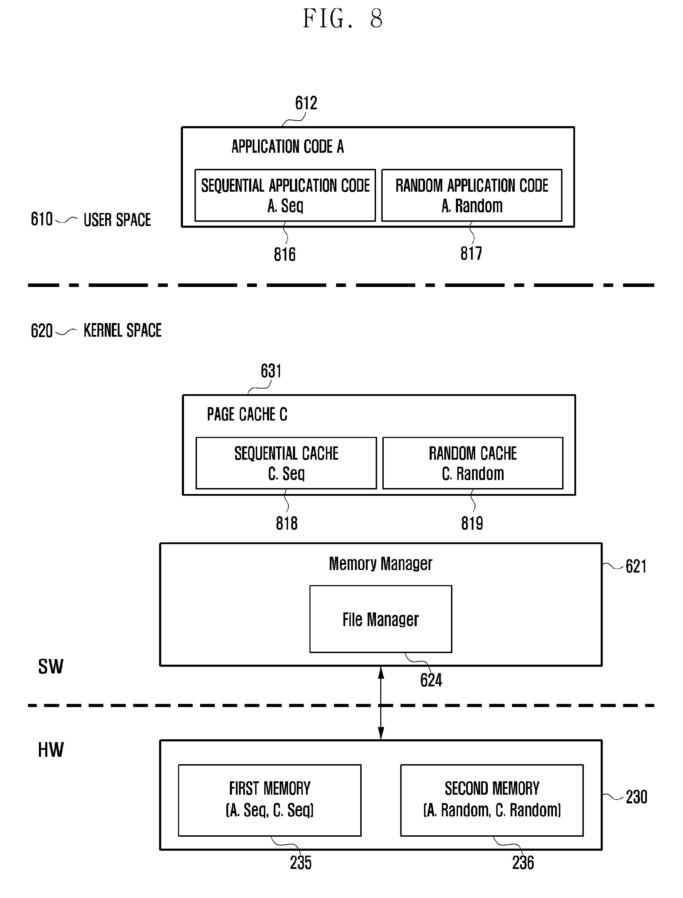

Although the components such as the cellular module 221 (for example, communication processor), the memory 230, and the power managing module 295 are illustrated as components separate from the AP 210 in FIG. 8, the AP 210 may include at least some (for example, cellular module 221) of the aforementioned components in an embodiment of the present disclosure.

According to an embodiment of the present disclosure, the AP 210 or the cellular module 221 (for example, CP) may load a command or data, which is received from at least one of a non-volatile memory and other components connected to each of the AP 210 and the cellular module 221, to a volatile memory and process the loaded command or data. Further, the AP 210 or the cellular module 221 may store data, which is received from at least one of other components or generated by at least one of other components, in a non-volatile memory.

Each of the Wi-Fi module 223, the BT module 225, the GPS module 227, and the NFC module 228 may include, for example, a processor for processing data transmitted/received through the corresponding module. Although the cellular module 221, the Wi-Fi module 223, the BT module 225, the GPS module 227, and the NFC module 228 are illustrated as blocks separate from each other in FIG. 2, at least some (for example, two or more) of the cellular module 221, the Wi-Fi module 223, the BT module 225, the GPS module 227, and the NFC module 228 may be included in one integrated chip (IC) or one IC package according to an embodiment of the present disclosure. For example, at least some (for example, the communication processor corresponding to the cellular module 221 and the Wi-Fi processor corresponding to the Wi-Fi module 223) of the cellular module 221, the Wi-Fi module 223, the BT module 225, the GPS module 227, and the NFC module 228 may be implemented by one SoC.

The RF module 229 transmits/receives data, for example, an RF signal. Although not illustrated, the RF module 229 may include, for example, a transceiver, a power amp module (PAM), a filter, a low noise amplifier (LNA) or the like. Further, the RF module 229 may further include a component for transmitting/receiving electronic waves over a free air space in wireless communication, for example, a conductor, a conducting wire, or the like. Although the cellular module 221, the Wi-Fi module 223, the BT module 225, the GPS module 227, and the NFC module 228 share one RF module 229 in FIG. 2, at least one of the cellular module 221, the Wi-Fi module 223, the BT module 225, the GPS module 227, and the NFC module 228 may transmit/receive an RF signal through a separate RF module according to an embodiment of the present disclosure.

The SIM card 224 is a card including a SIM and may be inserted into a slot formed in a portion of the electronic device. The SIM card 224 includes unique identification information (for example, integrated circuit card identifier (ICCID)) or subscriber information (for example, international mobile subscriber identity (IMSI).

The memory 230 (for example, memory 130) may include an internal memory 232 and an external memory 234. The internal memory 232 may include, for example, at least one of a volatile memory (for example, a random access memory RAM, a dynamic RAM (DRAM), a static RAM (SRAM), a synchronous DRAM (SDRAM), and the like), and a non-volatile Memory (for example, a read only memory (ROM), a one time programmable ROM (OTPROM), a programmable ROM (PROM), an erasable and programmable ROM (EPROM), an electrically erasable and programmable ROM (EEPROM), a mask ROM, a flash ROM, a NAND flash memory, an NOR flash memory, and the like).

According to an embodiment of the present disclosure, the internal memory 232 may be a solid state drive (SSD). The external memory 234 may further include a flash drive, for example, a compact flash (CF), a secure digital (SD), a micro-SD, a mini-SD, an extreme digital (xD), or a memory stick. The external memory 234 may be functionally connected to the electronic device 200 through various interfaces. According to an embodiment of the present disclosure, the electronic device 200 may further include a storage device (or storage medium) such as a hard drive.

The sensor module 240 measures a physical quantity or detects an operation state of the electronic device 200, and converts the measured or detected information to an electronic signal. The sensor module 240 may include, for example, at least one of a gesture sensor 240A, a gyro sensor 240B, an atmospheric pressure (barometric) sensor 240C, a magnetic sensor 240D, an acceleration sensor 240E, a grip sensor 240F, a proximity sensor 240G, a color sensor 240H (for example, red, green, and blue (RGB) sensor) 240H, a biometric sensor 2401, a temperature/humidity sensor 240J, an illumination (light) sensor 240K, and an ultraviolet (UV) sensor 240M. Additionally or alternatively, the sensor module 240 may include, for example, a E-nose sensor, an electromyography (EMG) sensor, an electroencephalogram (EEG) sensor, an electrocardiogram (ECG) sensor, an infrared (IR) sensor, an iris sensor, a fingerprint sensor (not illustrated), and the like. The sensor module 240 may further include a control circuit for controlling one or more sensors included in the sensor module 240.

The input device 250 includes a touch panel 252, a (digital) pen sensor 254, a key 256, and an ultrasonic input device 258. For example, the touch panel 252 may recognize a touch input in at least one type of a capacitive type, a resistive type, an infrared type, and an acoustic wave type. The touch panel 252 may further include a control circuit. In the capacitive type, the touch panel 252 can recognize proximity as well as a direct touch. The touch panel 252 may further include a tactile layer to provide a tactile reaction to the user.

The (digital) pen sensor 254 may be implemented, for example, using a method identical or similar to a method of receiving a touch input of the user, or using a separate recognition sheet. The key 256 may include, for example, a physical button, an optical key, or a key pad. The ultrasonic input device 258 can detect an acoustic wave by a microphone (for example, microphone 288) of the electronic device 200 by generating an ultrasonic signal to identify data and can perform wireless recognition. According to an embodiment of the present disclosure, the electronic device 200 receives a user input from an external device (for example, computer or server) connected to the electronic device 200 using the communication module 220.

The display 260 (for example, display 150) includes a panel 262, a hologram device 264, and a projector 266. The panel 262 may be, for example, a liquid crystal display (LCD) or an active matrix organic light emitting diode (AM-OLED). The panel 262 may be implemented to be, for example, flexible, transparent, or wearable. The panel 262 may be configured by the touch panel 252 and one module. The hologram device 264 shows a stereoscopic image in the air by using interference of light. The projector 266 projects light on a screen to display an image. For example, the screen may be located inside or outside the electronic device 200. According to an embodiment of the present disclosure, the display 260 may further include a control circuit for controlling the panel 262, the hologram device 264, and the projector 266.

The interface 270 includes, for example, an HDMI 272, a USB 274, an optical interface 276, and a D-subminiature (D-sub) 278. The interface 270 may be included in, for example, the communication interface 160 illustrated in FIG. 1. Additionally or alternatively, the interface 270 may include, for example, a mobile high-definition link (MHL) interface, an SD card/multi-media card (MMC), or an infrared data association (IrDA) standard interface.

The audio module 280 bi-directionally converts sound and an electronic signal. At least some components of the audio module 280 may be included in, for example, the I/O module 140 illustrated in FIG. 1. The audio module 280 processes sound information input or output through, for example, a speaker 282, a receiver 284, an earphone 286, the microphone 288 or the like.

The camera module 291 can photograph a still image and a video. According to an embodiment of the present disclosure, the camera module 291 may include one or more image sensors (for example, a front sensor or a back sensor), an image signal processor (ISP) (not shown) or a flash (for example, an LED or xenon lamp).

The power managing module 295 manages power of the electronic device 200. Although not illustrated, the power managing module 295 may include, for example, a power management integrated circuit (PMIC), a charger IC, or a battery or fuel gauge.

The PMIC may be mounted to, for example, an integrated circuit or an SoC semiconductor. A charging method may be divided into wired and wireless methods. The charger IC charges a battery and prevent over voltage or over current from flowing from a charger. According to an embodiment of the present disclosure, the charger IC includes a charger IC for at least one of the wired charging method and the wireless charging method. The wireless charging method may include, for example, a magnetic resonance method, a magnetic induction method and an electromagnetic wave method, and additional circuits for wireless charging, for example, circuits such as a coil loop, a resonant circuit, a rectifier or the like may be added.

The battery fuel gauge measures, for example, a remaining quantity of the battery 296, or a voltage, a current, or a temperature during charging. The battery 296 may store or generate electricity and supply power to the electronic device 200 by using the stored or generated electricity. The battery 296 may include a rechargeable battery or a solar battery.

The indicator 297 shows particular statuses of the electronic device 200 or a part (for example, AP 210) of the electronic device 200, for example, a booting status, a message status, a charging status and the like. The motor 298 converts an electrical signal into a mechanical vibration.

Although not illustrated, the electronic device 200 may include a processing unit (for example, GPU) for supporting a module TV. The processing unit for supporting the mobile TV may process, for example, media data according to a standard of digital multimedia broadcasting (DMB), digital video broadcasting (DVB), media flow or the like.

Each of the components of the electronic device according to various embodiments of the present disclosure may be implemented by one or more components and the name of the corresponding component may vary depending on a type of the electronic device. The electronic device according to various embodiments of the present disclosure may include at least one of the above described components, a few of the components may be omitted, or additional components may be further included. Also, some of the components of the electronic device according to various embodiments of the present disclosure may be combined to form a single entity, and thus may equivalently execute functions of the corresponding components before being combined.

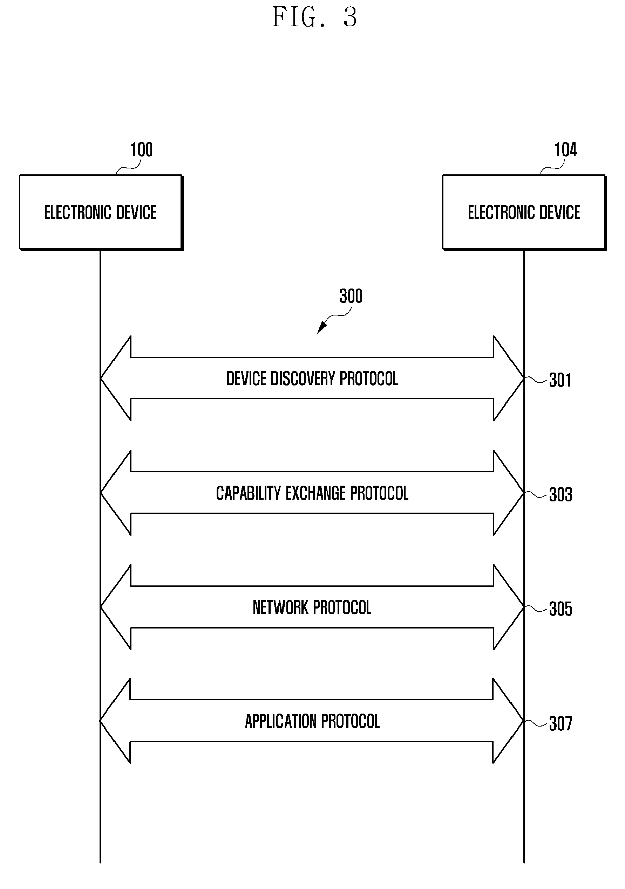

FIG. 3 is a diagram illustrating a communication protocol between electronic devices according to various embodiments of the present disclosure.

Referring to FIG. 3, for example, the communication protocols 300 may include a device discovery protocol 301, a capability exchange protocol 303, a network protocol 305, and an application protocol 307.

According to an embodiment of the present disclosure, the device discovery protocol 301 enables electronic devices (e.g., the electronic device 100 and the electronic device 104) to detect external devices capable of communicating with the electronic devices, or connect with the detected external electronic devices. For example, the electronic device 100 may detect the electronic device 104 as an electronic device capable of communicating with the electronic device 100 through communication methods (e.g., Wi-Fi, BT, USB, or the like) which are available in the electronic device 100, by using the device discovery protocol 301. In order to connect with the electronic device 104 for communication, the electronic device 100 may obtain and store identification information on the detected electronic device 104 using the device discovery protocol 301. The electronic device 100 may initiate the communication connection with the electronic device 104, for example, based on at least the identification information.

According to an embodiment of the present disclosure, the device discovery protocol 301 may be a protocol for authentication between a plurality of electronic devices. For example, the electronic device 100 may perform authentication between the electronic device 100 and the electronic device 104, based on at least communication information {e.g., media access control (MAC), universally unique identifier (UUID), subsystem identification (SSID), Internet protocol (IP) address} for connection with the electronic device 104.

According to an embodiment of the present disclosure, the capability exchange protocol 303 may enable exchanging information related to service functions which can be supported by at least one of the electronic device 100 or the electronic device 104. For example, the electronic device 100 and the electronic device 104 may exchange information on service functions which are currently supported by each electronic device with each other through the capability exchange protocol 303. The exchangeable information may include identification information indicating a specific service among services supported by the electronic device 100 and the electronic device 104. For example, the electronic device 100 may receive identification information for a specific service provided by the electronic device 104 from the electronic device 104 through the capability exchange protocol 303. In this case, the first electronic device 100 may determine whether the electronic device 100 can support the specific service, based on the received identification information.

According to an embodiment of the present disclosure, the network protocol 305 may enable controlling the data flow transmitted and received between the electronic devices (e.g., the electronic device 100 and the electronic device 104) to provide interworking services. For example, at least one of the electronic device 100 or the electronic device 104 may perform the error control or the data quality control using the network protocol 305. Alternatively or additionally, the network protocol 305 may determine the transmission format of data transmitted and received between the electronic device 100 and the electronic device 104. In addition, at least one of the electronic device 100 or the electronic device 104 may manage a session (e.g., session connection or session termination) for the data exchange between the electronic devices using the network protocol 305.

According to an embodiment of the present disclosure, the application protocol 307 may provide a procedure or information to exchange data related to services that are provided to the external devices. For example, the electronic device 100 may provide services to the electronic device 104 through the application protocol 307.

According to an embodiment of the present disclosure, the communication protocol 300 may include standard communication protocols, communication protocols designated by individuals or groups (e.g., communication protocols designated by communication device manufacturers or network providers), or a combination thereof.

According to an embodiment of the present disclosure, the communication protocol 300 may include a standard communication protocol, a communication protocol designated by an individual or organization (for example, a communication protocol self-designated by a communication device manufacturing company or a network supplying company) or a combination thereof.

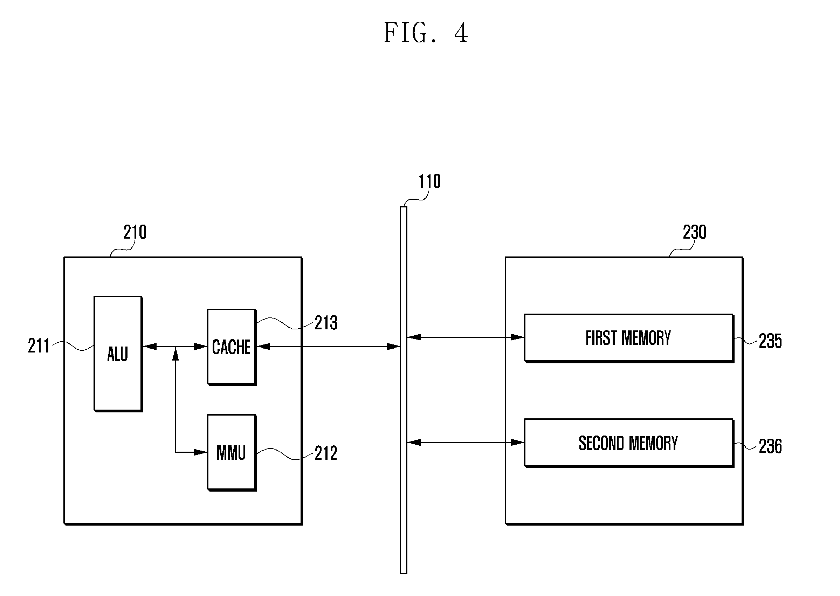

FIG. 4 is a block diagram illustrating an electronic device memory management system according to various embodiments of the present disclosure.

Referring to FIG. 4, the electronic device 200 may include a bus 110, a processor 210, and a memory 230. The processor 210 may be the processor 120 of FIG. 1 and the AP 210 of FIG. 2. The memory 230 may be the memory 130 of FIG. 1 and the memory 230 of FIG. 2.

The processor 210 may be connected to the memory 230 via the bus 110 and communicate therewith.

According to another embodiment of the present disclosure, the processor 210 may be directly connected to the memory 230, not via the bus 110, and communicate therewith.

The processor 210 may include at least one arithmetic and logic unit (ALU) 211, a memory management unit (MMU) 212, and a cache 213.

The processor 210 processes tasks according to the operating system and various application executions. The processor 210 controls the memory 230 according to the operating system and application executions.

The processor 210 controls the cache 213, which determines frequently used commands or data for fast access to frequently used data.

When the virtual address of a memory is transferred to the cache 213, the processor 210 may receive instructions and data that match the corresponding virtual address from the cache 213.

In addition, the processor 210 may receive write and read attribute information regarding a memory space that matches with the virtual address via the MMU 212.

The ALU 211 is a circuit for calculating arithmetic and logic operations, and may add, subtract, or compare input data or take the logical sum or logical product of input data, according to a command provided to the processor 210, and may output the result of operation. The ALU 211 may output the result of operation (e.g. data). Data output from the ALU 211 may be transferred to the cache 213.

The MMU 212 manages access of the processor 210 to a memory, converts a virtual memory address to a physical memory address, and may play the role of memory protection, cache management, bus mediation, etc. The MMU 212 may further include a translation lookaside buffer (TLB, not illustrated) or may have an access thereto.

The MMU 212 converts the virtual memory address of a memory 230 space, which is referred to according to a task execution, to a physical memory address. When a virtual address is received from the cache 213, the MMU 212 may convert the received virtual address to a physical address, which matches with the corresponding virtual memory address, and read or write data at the corresponding physical address.

The electronic device 200 may include a heterogeneous memory as a memory 230 that is capable of exchanging data directly with the processor 210. The heterogeneous memory includes at least one memory device having a heterogeneous memory interface. The memory 230 may include a first memory 235 and a second memory 236, which are different memory types that have at least one different characteristic(e.g., the packaging type, the number of I/Os, the I/O data rate per pin, and the total bandwidth). For example, the first memory 235 may be a WIDE I/O DRAM, and the second memory 236 may be a low power double data rate DRAM (LPDDR DRAM). Detailed contents regarding the WIDE I/O DRAM are disclosed in "JEDEC STANDARD WIDE I/O SINGLE DATA RATE(WIDE I/O SDR), JESD229, December 2011", etc., all disclosures of which are incorporated herein for reference. Detailed contents regarding the LPDDR DRAM are disclosed in "JEDEC STANDARD LOW PPWER DOUBLE DATE RATE 3 SDRAM(LPDDR3), JESD209-3, May 2012", etc., all disclosures of which are incorporated herein for reference.

That is, when the first memory has a first bandwidth and a first clock frequency, the second memory may have a second bandwidth and a second clock frequency. In addition, the first memory and the second memory may have different characteristics in terms of heat generation, power efficiency, etc.

In a different embodiment of the present disclosure, the second memory 236 may be a non-volatile memory (e.g. auxiliary memory), e.g. a memory device having a flash interface.

For example, judging from the bandwidth, the first memory may be described as a high-performance memory compared with the second memory, and the second memory may be described as a low-performance memory compared with the first memory.

In addition, according to embodiments of the present disclosure, a memory controller may be configured between the bus 110 and the heterogeneous memory. According to the device configuration, the memory controller may be configured for each heterogeneous memory, or configured as a single integrated memory controller. When the memory controller is configured for each heterogeneous memory, the first memory device 235 and the second memory device 236 may receive commands/addresses from different memory controllers and may exchange data with different memory controllers.

The processor 210 may classify the type of data to be transmitted to the memory 230, according to the operating system and application executions. As used herein, the data may include at least one of data to be loaded from a storage device to the memory 230, data received by a communication module 220, data received by an interface 270, data sensed by a sensor module 240, data input by an input device 250, data taken by a camera module 291, data recorded by an audio module 280, data generated by an application, and data generated by the operating system.

According to various embodiments of the present disclosure, the processor 210 classifies the type of data to be transmitted to the memory 230. The processor 210 may classify the type of data based on the usage of data, the data storing structure, the data sharing attribute, the required amount of data access, and the required initial data access rate. For example, the processor 210 may classify the type of data into one of an application code, application data, a page cache, driver data, and operating system data based on the usage of data. The processor 210 may classify the type of data into one of a sequential application code, a random application code, a sequential cache, and a random cache based on the data storing structure.

In addition, the processor 210 may classify the type of data into one of a private application code, a shared application code, private application data, and shared application data based on the data sharing attribute. The processor 210 may classify the type of data into one of a sequential application code, a random application code, application data, a sequential cache, a page cache, a random cache, driver data, and operating system data based on the data usage and the data storing structure. The processor 210 may classify the type of data into one of a private application code, a shared application code, private application data, shared application data, a page cache, driver data, and operating system data based on the data usage and the data sharing attribute.

The processor 210 may classify the type of data into one or more of an application code, application data, a page cache, driver data, operating system data, a sequential application code, a random application code, a sequential cache, a random cache, a private application code, a shared application code, private application data, and shared application data.

The processor 210, when converting the virtual memory address of the data to a physical memory address, may determine a heterogeneous memory, in which the data is to be stored, according to the data type. In addition, the processor 210, when converting the virtual memory address of the data to a physical memory address, may determine a heterogeneous memory, in which the data is to be stored, according to the data type based on at least a part of a distribution policy. As used herein, the distribution policy refers to a rule for selecting a heterogeneous memory 230, when there is a memory allocation request regarding a specific piece of data, in which the corresponding data is to be stored, according to a criterion or condition, such as the data type.

A method for determining a heterogeneous memory, in which data is to be stored, by the processor 210 according to an embodiment of the present disclosure is as follows: when the data type pertains to the driver or the operating system, the virtual memory address may be, when converted to a physical memory address, converted to a physical memory address of the first memory 235; when the data type pertains to a page cache or an application (e.g. an application code or application data), the virtual memory address may be, when converted to a physical memory address, converted to a physical memory address of the second memory 236.

A method for determining a heterogeneous memory, in which data is to be stored, by the processor 210 according to an embodiment of the present disclosure is as follows: when the data type is a sequential type, the virtual memory address may be, when converted to a physical memory address, converted to a physical memory address of the first memory 235; when the data type is a random type, the virtual memory address may be, when converted to a physical memory address, converted to a physical memory address of the second memory 236.

A file manager, which is included in the electronic device 200, manages the pattern type of data stored in a storage device (or storage medium) such as a hard drive.

For example, the file manager may be aware of, in advance, whether application code and cache data are stored in a storage device (or storage medium) in a sequential pattern or in a random pattern.

Data of the sequential type (or data of the sequential pattern) refers to data having records stored in a storage device (or storage medium) that are stored sequentially based on one or more key field values. Data of the sequential type (or data of the sequential pattern) is data stored sequentially in a storage device (or storage medium). Data of the sequential type (or data of the sequential pattern) may be stored in a storage device (or storage medium) in a sequential pattern, but not necessarily continuously.

Data of the random type (or data of the random pattern) refers to a pattern in which data is stored in a storage device (or storage medium) without any order.

When data of the sequential pattern is loaded onto the memory 230, there is an increased probability, based on the file system policy, that the data will be loaded in address spaces, which are connected in series, on the memory 230. When data of the random pattern is loaded onto the memory 230, there is an increased probability, based on the file system policy, that the data will be loaded in address spaces that are scattered and distributed on the heterogeneous memory 230. For these reasons, the file system of the operating system frequently rearranges data in a sequential pattern, which requires a large amount or processing time,. According to an embodiment of the present disclosure, data of a sequential pattern is allocated to a high-performance memory, thereby increasing the gain of the high-performance memory.

In an embodiment of the present disclosure, a method for determining a heterogeneous memory to store data in based on whether the data type is private or shared. When the data type is the private type, a virtual memory address may be, when converted to a physical memory address, converted to a physical memory address of the second memory 236 When the data type is the shared type, the virtual memory address may be, when converted to a physical memory address, converted to a physical memory address of the first memory 235. The electronic device 200 may determine whether the data type is private or shared through the memory manager. For example, some operating systems (e.g. Linux, Solaris, Android) manage data, which is shared between processes, as shared-type data and manage data, which is used in a single process only, as private-type data. According to an embodiment of the present disclosure, shared data of a program and an application is allocated to a high-performance memory, thereby using the high-performance memory, which has a limited capacity, at a higher efficiency.

In an embodiment of the present disclosure, the processor 210 may determine a heterogeneous memory, in which data is to be stored, based on at least one distribution policy (e.g. distribution policy according to the purpose). The distribution policy, in this regard, may be pre-stored or pre-set in the electronic device 200. The electronic device 200 may update the pre-stored or preset distribution policy, may generate or set a new distribution policy during operation, and may receive or download a distribution policy from a different device. The distribution policy may be determined experimentally. For example, when a better throughput is obtained by distributing specific data to the first memory 235 rather than to the second memory 236, the specific data may be distributed to the first memory 235. Conversly, when a better throughput is obtained by distributing specific data to the second memory 236 rather than to the first memory 235, the specific data may be distributed to the second memory 236.

The processor 210 may determine (i.e., select) a memory 230 according to the data type based on the distribution policy and may store the data at the corresponding physical memory address.

According to an embodiment of the present disclosure, the processor 210 may overlap or merge and use a plurality of distribution policies, to determine a heterogeneous memory 230 in which data is to be stored. When a plurality of distribution policies are used, the processor 210 may apply them according to the priority of respective distribution policies. The plurality of distribution policies, in this regard, may be stored in the electronic device 200 independently of each other.

In an embodiment of the present disclosure, a method for determining a heterogeneous memory 230 by the processor 210 may be performed in the following manner: memories included in the heterogeneous memory 230 are distinguished between high-performance memories, which have more better performance or have more storage space, and low-performance memories, which have lower performance, and data is preferentially arranged in the high-performance memories. The processor 210, even when data is preferentially arranged in a high-performance memory, may also distribute data in a low-performance memory based on the free space of the high-performance memory.

The distribution policy may be updated according to the system situation of the electronic device 200. For example, the electronic device 200 may be connected to a different electronic device and may update the distribution policy.

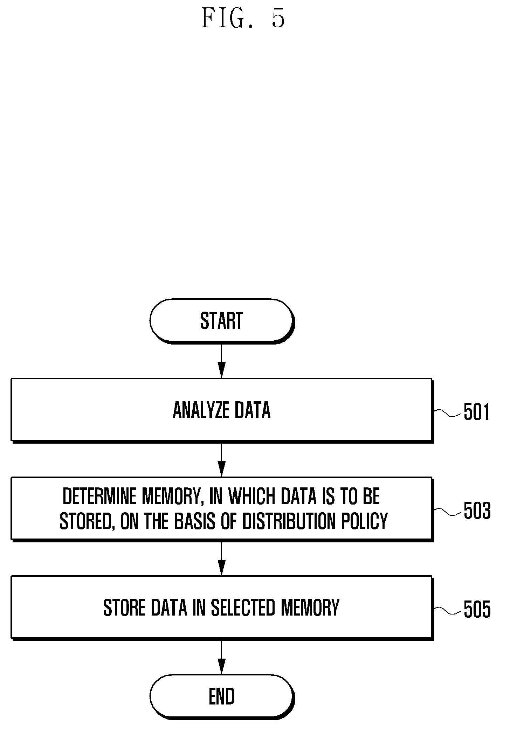

FIG. 5 is a flowchart for performing an electronic device memory management method according to various embodiments of the present disclosure.

Referring to FIG. 5, when software data of the electronic device 200 is allocated (stored) in a heterogeneous memory 230, a type of memory for the data is selected. In an embodiment of the present disclosure, FIG. 5 may operate in a memory manager of the operating system.

The electronic device 200 may cause hardware or software components to perform processing and operation of various kinds of data, including multimedia data.

Software included in the electronic device 200 may be distinguished between a user space and a kernel space. The user space may include data regarding various applications, and the kernel space may include data regarding a page cache, data regarding a driver, and data regarding the operating system.

The kernel space may include a memory manager. The memory manager may include at least one of a virtual address manager, a physical address manager, and a file manager.

When there is a memory allocation request regarding specific data required by software, the memory manager may allocate the corresponding data to a part of a physical memory. In addition, the memory manager may release the allocation upon determining that the data is no longer needed.

The memory manager, when there is a request of a process, may allocate the corresponding process to a part of the physical memory. In addition, the memory manager may release the allocation upon determining that the process is no longer needed.

The virtual address manager included in the memory manager may mange the virtual address of data, and the physical address manager included in the memory manager may convert the virtual address of the data to a physical address and allocate the data to the physical memory according to the physical address.

Referring to FIG. 5, the electronic device 200 may identify the type of data to be transmitted to the memory 230 in operation 501. For example, the type of data of the entire or partial software system, which is loaded onto the memory 230 of the electronic device and operated, maybe identified in operation 501.

According to an embodiment of the present disclosure, a method for identifying the type of data by the memory manager in operation 501 is to analyze the virtual address of the data, the metadata (additional information transferred together with the data) of the data, or factor information and the like, which are included in a software function call that has requested memory allocation.

According to an embodiment of the present disclosure, the electronic device 200, in operation 501, may confirm whether the data is data that requires a small initial setup time or not.

According to an embodiment of the present disclosure, the electronic device 200, in operation 501, may confirm whether the data type requires a high throughput or requires a low throughput.

According to an embodiment of the present disclosure, the electronic device 200, in operation 501, may confirm whether the data is of a private data type or a shared data type.

According to an embodiment of the present disclosure, the electronic device 200, in operation 501, may confirm whether the data is of a sequential type or a random type.

According to an embodiment of the present disclosure, the electronic device 200, in operation 503, may determine (select) a heterogeneous memoryto store the data based on the data typedetermined in operation 501.

The distribution policy may be determined experimentally, for example. For example, when a better throughput is obtained by distributing specific data to the first memory 235 rather than to the second memory 236, the specific data may be distributed to the first memory 235. Conversely, when a better throughput is obtained by distributing specific data to the second memory 236 rather than to the first memory 235, the specific data may be distributed to the second memory 236.

For example, a case in which the data has been analyzed as data requiring a small initial setup time in operation 501 is as follows.

The electronic device 200, in operation 503, may distribute data, which requires a small initial setup time, to a physical memory address of the second memory 236, which has memory characteristics that have a comparatively small initial setup time, among heterogeneous memories.

The electronic device 200, in operation 503, may determine to store the private data in the first memory 235 and may determine to store the shared data in the second memory 236.

The electronic device 200, in operation 503, may determine to store the sequential-type data in the first memory 235 and may determine to store the random-type data in the second memory 236.

According to an embodiment of the present disclosure, the electronic device 200 may have at least one distribution policy. Multiple distribution policies may be applied independent of each other or to overlap each other. For example, the multiple distribution policies may be overlapped and reviewed sequentially according to priority.

It will be assumed, for example, that a system has applied a distribution policy based on "sequential/random I/O data classification" and a distribution policy based on "shared/static data classification" in an overlapping manner. When data has both "shared" and "random" types, different memories 230 may be determined for respective distribution policies. In this case, the policy that "shared" data type is stored in the first memory may have a higher priority (i.e., weight) than the policy that "random" data type is stored in the second memory, and a final determination may be made to store the data in the first memory.

In a similar embodiment of the present disclosure, if the data type is both "sequential" and "is supposed to have a low initial setup time," the policy that "sequential" data is stored in the first memory may have a higher priority than the policy that data "that has a low initial setup time" is stored in the second memory, and a final determination may be made to store the data in the first memory.

Besides the cases described above as examples, there may be various embodiments with regard to various distribution policy combinations.

According to an embodiment of the present disclosure, the distribution policy applied to the electronic device 200 and its priority may be varied during the operation of the electronic device 200 according to the state of the electronic device 200 and commands.

According to an embodiment of the present disclosure, in connection with a method having multiple distribution policies, the electronic device 200 may include a distribution policy table that includes a series of distribution policies. The electronic device 200 may refer to the distribution policy table and determine to which memory, among heterogeneous memories, data will the data be distributed. The electronic device 200 may selectively apply at least one of distribution policies, which are described in the distribution policy table. In addition, the distribution policy table may include information regarding various distribution policy combinations or information regarding the priority (i.e., weight) according to the same. For example, the distribution policy table may include a definition regarding how a given data type will be classified with regard to the number of all cases of policy combinations.

Table 1 below illustrates an example of the distribution policy table.

**Table 1**

| Policy index | Policy name | Policy content | Priority |
|---|---|---|---|
| 1 | usage | store, if operation system data, in first memory store, if application data, in second memory | 3 |
| 2 | storing structure | store, if sequential data, in first memory store, if random data, in second memory | 2 |
| 3 | sharing attribute | store, if shared data, in first memory store, if private data, in second memory | 1 |
| 4 | initial setup time | if initial setup time is larger than reference value, store in first memory if initial setup time is smaller than reference value, store in second memory | 4 |

The electronic device 200 may selectively use a part or all of the four policies stored in the distribution policy table illustrated in Table 1. For example, the electronic device 200 may select Policy 2 (storing structure) and Policy 3 (sharing attribute) from Table 1 and use them in an overlapping manner. In such a case, with regard to having both "shared" and "random" data, a memory determined based on Policy 2 is the second memory, and a memory determined based on Policy 3 is the first memory, which is different from the second memory. In another embodiment, the priority of Policy 3 is 1, and the priority of Policy 2 is 2; as such, Policy 3 has a high priority, and the electronic device 200 may finally determine to store the data in the first memory.

Furthermore, although the distribution policy has been described in the above embodiments based on two-way classification, there may be three or more heterogeneous memory devices 230, and the distribution policy and the distribution policy table may also be composed based on three-way classification, four-way classification, or a higher level of classification.

The electronic device 200, in operation 505, may store the data in the selected heterogeneous memory 230, which has been determined in operation 503.

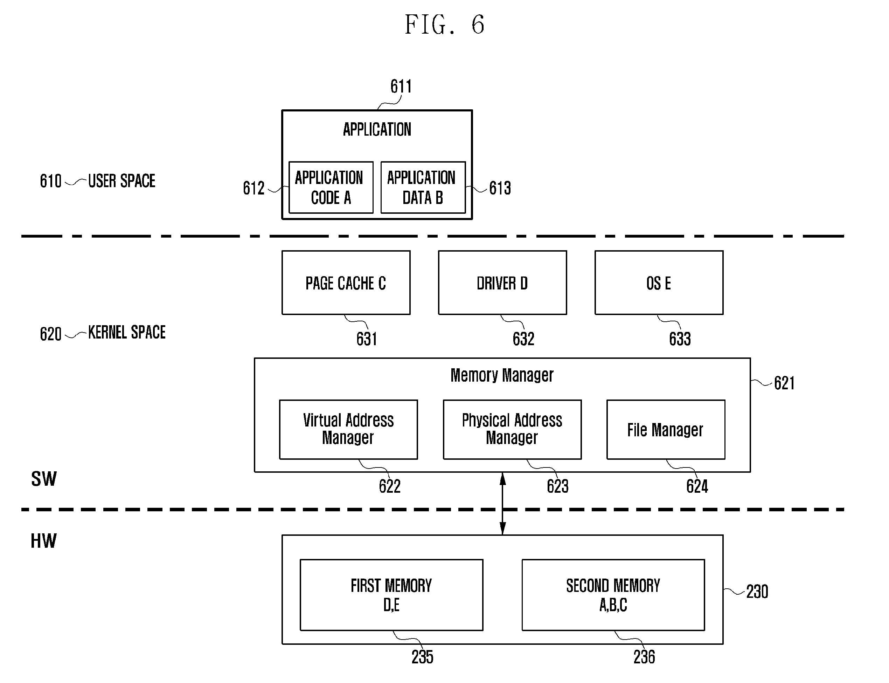

FIG. 6 is a diagram of an electronic device memory management method according to various embodiments of the present disclosure.

The electronic device 200 may execute the operating system or an application program to control hardware or software components, and may perform processing and operation of various kinds of data, including multimedia data.

A software space included in the electronic device 200 may be distinguished between a user space 610 and a kernel space 620. The user space 610 may include one or more applications 611. The applications 611 may be classified into an application code (hereinafter, referred to as data A) 612 related to an application operation command and application data (hereinafter, referred to as data B) 613.

The user space 610 and the kernel space 620 may be included in the software space of the electronic device 200, and the heterogeneous memory 230 may be included in the hardware space of the electronic device 200.

The kernel space 620 may include a page cache (hereinafter, referred to as data C) 631, a driver (hereinafter, referred to as data D) 632, and operating system data (hereinafter, referred to as data E) 633.

The kernel space 620 may use the page cache to improve the data I/O performance. At least some operating systems (e.g. Linux) can map a file onto a memory and handle a normal file or a device file as if accessing the memory; therefore, a page cache can be used.

The kernel space 620 may include a memory manager 621. The memory manager 621 may include at least one of a virtual address manager 622, a physical address manager 623, and a file manager 624.

The memory manager 621 included in the kernel space 620, when there is a memory allocation request regarding specific data required by software, may allocate a partial space of the physical memory to store the corresponding data. In addition, the memory manager 621 may release the allocation upon determining that the data is no longer needed.

The memory manger 621, when there is a request of a process, may allocate a partial space of the physical memory 230 to the corresponding process. In addition, the memory manager 621 included in the kernel space may release the allocation upon determining that the process is no longer needed.

The virtual address manger 622 included in the memory manager 621 may determine a virtual address of a process, and the physical address manager 623 included in the memory manage 621 may convert a virtual address of a process to a physical address and allocate a partial space of the physical memory to the process according to the physical address.

According to an embodiment of the present disclosure, the electronic device 200 may classify data types, according to the memory operating scheme for each operating system (memory type of the memory manager), into an application code (data A) 612, application data (data B) 613, a page cache (data C) 631, a driver (data D) 632, and operating system data (data E) 633 and, when the above pieces of data are stored in a physical memory by the memory manager 621, may select a memory in which the data is to be stored based on the corresponding data type and the distribution policy. For example, when a better throughput is obtained by distributing data D or data E to the first memory 235 rather than to the second memory 236, data D or data E may be distributed to the first memory 235. Conversely, when a better throughput is obtained in terms of the overall system by distributing data A, data B, or data C to the second memory 236 rather than to the first memory 235, data A, data B, or data C may be distributed to the second memory 236.

For example, when data A, data B, or data C requires a small initial setup time, data A, data B, or data C may be distributed to the second memory 236, which is characterized by a small initial setup time (for example, LPDDR interface). When data D or data E requires a large amount of processing at one time, data D or data E may be distributed to the first memory 235, which is characterized by a high-speed operation (for example, WIDE I/O interface). For example, when data A, data B, or data C a random data type, the electronic device 200 may distribute data A, data B, or data C to the second memory 236, which has an interface that facilitates random data processing (for example, LPDDR interface). When data D or data E a sequential data type, the electronic device 200 may distribute data D or data E to the first memory 235, which has an interface that facilitates sequential date processing (for example, WIDE I/O interface).

In this regard, when a collision occurs between results of distribution policies in a system where multiple distribution policies are applied together (for example, in the case of data characterized by both being sequential and having a small initial setup time), the heterogeneous memory, in which data is to be stored, may be determined according to the priority of distribution policies. Detailed descriptions regarding this have been given with reference to FIG. 5.

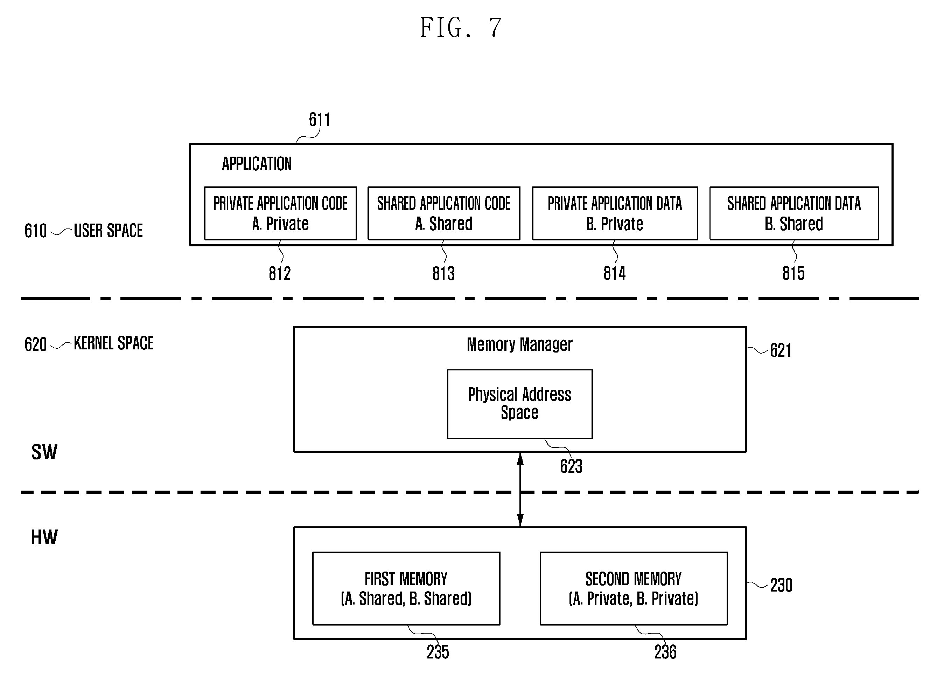

FIG. 7 is a diagram of an electronic device memory management method according to various embodiments of the present disclosure.

As described above, by allocating shared data of a process to a high-performance memory, the high-performance memory having a limited capacity can be used at a higher efficiency.

Referring to FIG. 7, the OS in the electronic device 200 may include a user space 610 and a kernel space 620. The user space 610 may include one or more applications 611. The application 611 may include a private application code related to an application operation command (hereinafter, referred to as data A.Private) 812, a shared application code (hereinafter, referred to as data A.Shared) 813, private application data (hereinafter, referred to as data B.Private) 814, and shared application data (hereinafter, referred to as data B.Shared) 815.

Determining whether data is private or shared is, for example, described as follows. An application code that controls the operation an applications included in the user space 610 may be determined as a private application code 812, and an application code capable of controlling the operation a different application may be determined as a shared application code 813. For example, application data included in one application, among applications included in the user space 610, may be determined as private application data 814, and application data included in at least one or more applications may be determined as shared application data 815.

According to an embodiment of the present disclosure, when the electronic device 200 distributes a private application code (data A.Private) 812, a shared application code (data A.Shared) 813, private application data (data B.Private) 814, and shared application data (data B.Shared) 815 to a heterogeneous memory 230, the electronic device 200 may determine the data type of the private application code (data A.Private) 812, the shared application code (data A.Shared) 813, the private application data (data B.Private) 814, and the shared application data (data B.Shared) 815 and select a heterogeneous memory, in which data is to be stored, based on the data type and a distribution policy. According to an embodiment, the electronic device 200 may distribute private data to the first memory 235 and distribute shared data to the second memory 236. For example, the electronic device 200 may distribute a private application code (data A.Private) 813 or private application data (data B.Private) 814 to a first memory 235 having WIDE I/O interface. For example, the electronic device 200 may distribute a shared application code (data A.Private) 812 or shared application data (data B.Shared) 815 to a second memory 236 having LPDDR interface.

FIG. 8 is a diagram of an electronic device memory management method according to various embodiments of the present disclosure.

As described above, the file manager of the operating system may manage whether pieces of data have been stored in a storage device in a sequential pattern or a random pattern. For example, the storage device refers to a normal block device, which is different from the memory 230 of the present disclosure.

Referring to FIG. 8, according to a file manager policy, application codes (data A) 612 may be classified into a sequential application code (hereinafter, referred to as data A.Seq) 816, a random application code (hereinafter, referred to as data A.Random) 817 and managed accordingly, and page caches (data C) 631 may also be classified into a sequential cache (hereinafter, data C.Seq) 818 and a random cache (hereinafter, referred to as data C.Random) 819 and managed accordingly.

According to an embodiment of the present disclosure, when the electronic device 200 distributes a sequential application code (data A.Seq) 816, a random application code (data A.Random) 817, a sequential cache (data C.Seq) 818, or a random cache (data C.Random) 817 to a heterogeneous memory 230, the electronic device 200 may determine the data type of the sequential application code (data A.Seq) 816, the random application code (data A.Random) 817, the sequential cache (data C.Seq) 818, or the random cache (data C.Random) 817 and select a heterogeneous memory, in which data is to be stored, based on the distribution policy.

According to an embodiment of the present disclosure, the electronic device 200, when loading data managed by the file manager onto a heterogeneous memory, may distribute sequential data to the first memory 235 and distribute random data to the second memory 236. For example, the electronic device 200 may distribute a sequential application code (data A.Seq) 816 or a sequential cache (data C.Seq) 818 to a first memory 235 having WIDE I/O interface. For example, the electronic device 200 may distribute a random application code (data A.Random) 817 or a random cache (data C.Random) 819 to a second memory 236 having LPDDR interface.

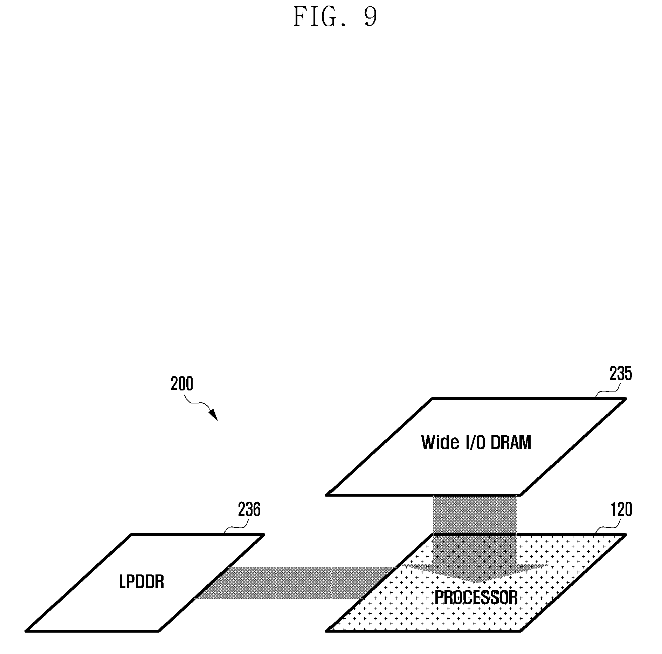

FIG. 9 is a diagram illustrating a connection structure between a heterogeneous memory and a processor according to various embodiments of the present disclosure.

Referring to FIG. 9, the electronic device 200 may include a processor 120, a first memory 235, and a second memory 236. The first memory 235 may be a WIDE I/O DRAM, and the second memory 236 may be an LPDDR DRAM.

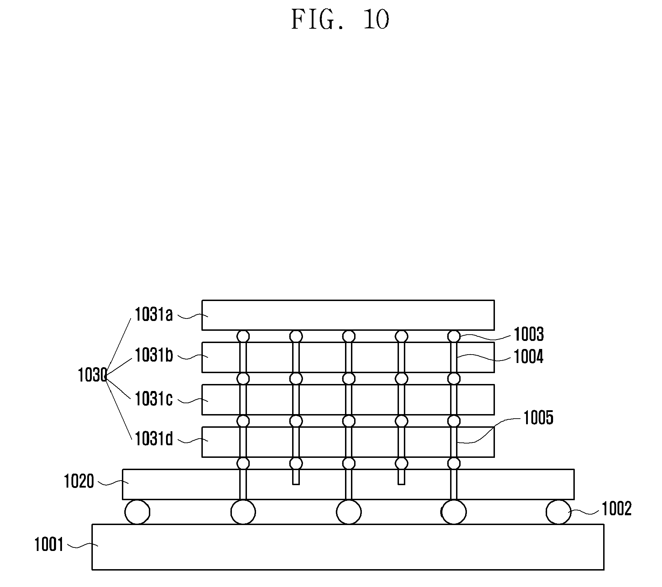

FIG. 10 is a diagram illustrating a stacking structure of a memory according to various embodiments of the present disclosure.

Referring to FIG. 10, a memory controller 1020 and a memory chipset 1030 may be packaged using a three-dimensional through silicon via (TSV) scheme.

The memory chipset 1030 may include multiple stacked memory chips 1031a to 1031d. The multiple stacked memory chips 1031a to 1031d may be electrically connected to each other by micro bumps 1003 and TSVs 1004 formed inside the memory chips 1031b to 1031d. Each of the multiple stacked memory chips 1031a to 1031d may have a different interface. The memory controller 1020 may be stacked on a substrate 1001 and electrically connected to the substrate 1001 by flip-chip bumps 1002. The memory chipset 1030 may be stacked on the memory controller 1020 in a face-to-back (F2B) scheme. The memory chipset 1030 and the memory controller 1020 may be electrically connected by micro bumps 1003 and TSVs 1005 formed inside the memory controller 1020. The memory controller 1020 and the memory chipset 1030 are packaged using a three-dimensional TSV scheme such that, while reducing the area occupied by the memory device, the I/O bandwidth can be increased.

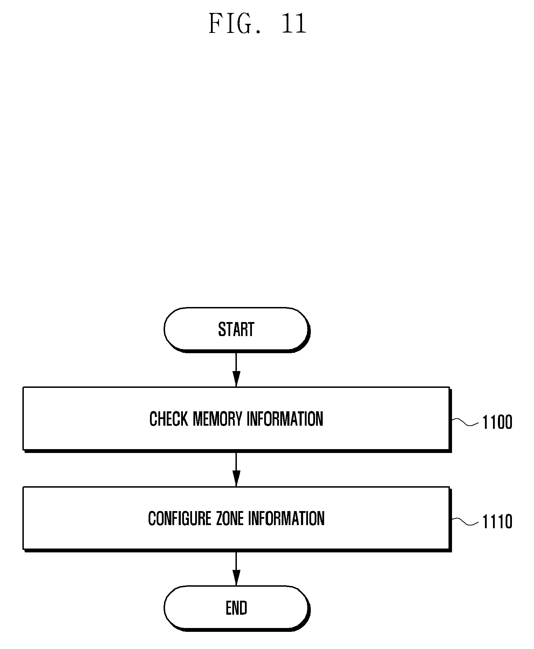

FIG. 11 is a flowchart for performing a zone setting method according to various embodiments of the present disclosure.

Referring to FIG. 11, the electronic device 200 may check memory information in operation 1100. The memory information is for configuring a zone, and may include at least one of the name of each zone to be configured, information indicating a memory associated with each zone, information indicating the start address of a memory space mapped with a zone, and information indicating the size of a zone. The memory associated with a zone may be the above-mentioned heterogeneous memory 230.

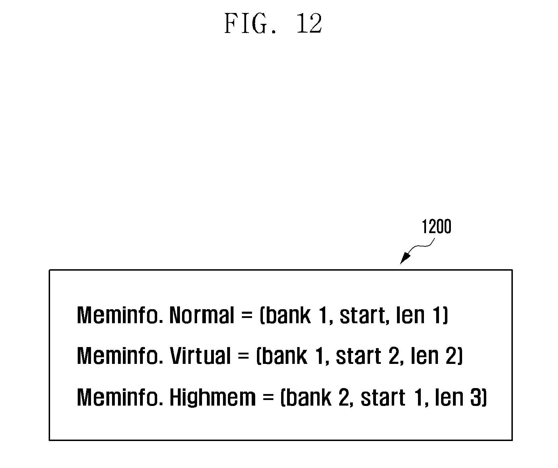

FIG. 12 is a diagram illustrating memory information according to various embodiments of the present disclosure.

Referring to FIG. 12, the memory information may be stored in the electronic device 200 as a file 1200, for example. The memory information 1200 includes, as the name of each zone, "Normal", "Virtual", and "Highmem". Different zone, such as "bank 1" and "bank 2," indicate memories associated with the corresponding zones, and "start", "start 2", and "start 1" are information indicating the start addresses of memory spaces mapped with corresponding zones. In addition, "len 1", "len 2", and "len 3" are information indicating the size of corresponding zones.

The name of each zone and parameter names are examples only, and other names can also be used. The electronic device 200 may perform operation 1100 during a booting process or during an operation.

Referring back to FIG. 11, the electronic device 200, in operation 1110, configures zone information according to the memory information checked in operation 1100. In various embodiments of the present disclosure, the electronic device 200 may configure zone information regarding three or more zones, which are to be allocated to two or more kinds of memories, according to the memory information. For example, the electronic device 200 may allocate two zones to the first memory 235 and allocate one zone to the second memory 236.

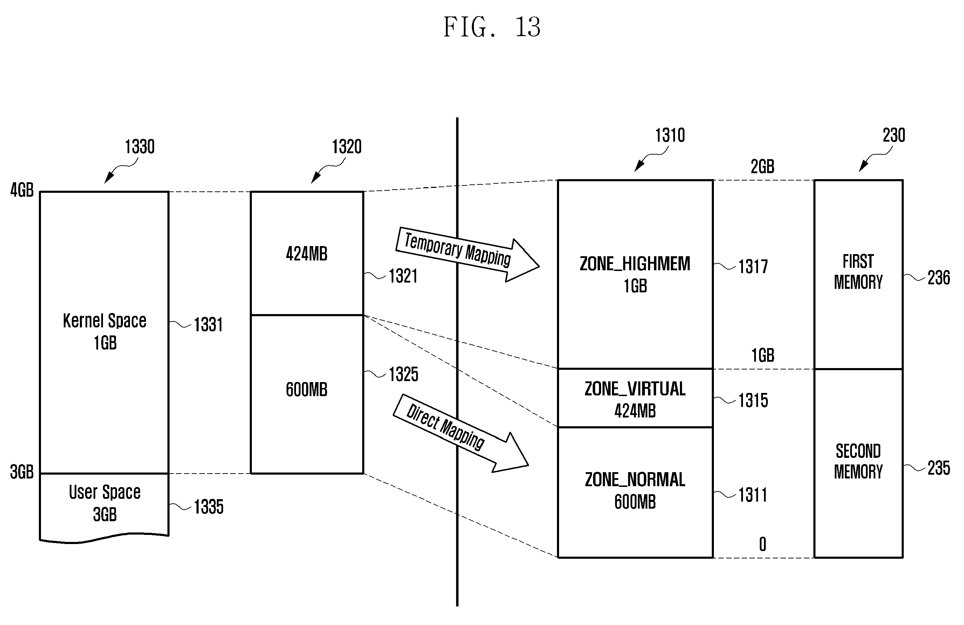

FIG. 13 is a diagram illustrating a zone structure according to various embodiments of the present disclosure.

Referring to FIG. 13, the stack 1310 is an example of the zone configuration configured in operation 1110. The zone configuration 1310 includes a zone 1311, a zone 1315, and a zone 1317. The zone 1311 is allocated to the first memory 235, has a size of 600MB, and has a name "Normal". The zone 1315 is allocated to the first memory 235, has a size of 424MB, and has a name "Virtual." The zone 1317 is allocated to the second memory 236, has a size of 1GB, and has a name "Highmem".

In this case, the zone 1311 and the zone 1315 are allocated to the same first memory 235, and the zone 1317 is allocated to the second memory 236. Such a configuration of mapping one or a plurality of zones to each memory can prevent the inefficiency of allocating multiple memories to a single zone. When data is to be distributed to a specific memory, a zone mapping with the corresponding memory can be selected and, as a result, data is efficiently distributed to a suitable memory according to the data type, thereby optimizing the performance of the electronic device 200. In this regard, the data type may include at least one of an application code, application data, a page cache, driver data, operating system data, a sequential application code, a random application code, a sequential cache, a random cache, a private application code, a shared application code, private application data, and shared application data.

The stack 1330 represents a memory configuration of a kernel, and the memory configuration 1330 includes a kernel space 1331 and a user space 1335.

The stack 1320 represents a configuration of mapping between the kernel space 1331, the "Normal" zone 1311, and the "Virtual" zone 1315, and includes a space 1321 having a size of 424MB and a space 1325 having a size of 600MB. The space 1321 is mapped with the "Virtual" zone 1315, and the space 1311 is mapped with the "Normal" zone 1311. Accordingly, the "Normal" zone 1311 and the "Virtual" zone 1315 are mapped with the kernel space 1331. In addition, the "Normal" zone 1311 and the "Virtual" zone 1315 are mapped with the first memory 235, so that at least a part of data in the kernel space 1331 is stored in the first memory 235. When the first memory 235 is faster than the second memory 236, the processing rate and access rate of data in the kernel space 1331 are improved compared to when data in the kernel space 1331 exists both in the first memory 235 and in the second memory 236, thereby improving the performance of the electronic device 200.

Although an embodiment has been described with reference to FIG. 13 wherein the space 1321 and the "Virtual" zone 1315 are mapped to a single space, the present disclosure is not limited thereto, and the "Virtual" zone 1315 may be mapped both to the kernel space 1331 and the user space 1335. In various embodiments of the present disclosure, when the "Virtual" zone 1315 has a size exceeding 424MB, the space remaining after mapping with the space 1321 may be mapped with the user space 1335. As the user space 1335 and the "Virtual" zone 1315 are mapped, data in the user space 1335 can be stored in the first memory 235 that has been mapped with the "Virtual" zone 1315 and, as a result, the processing rate and the access rate of data in the user space 1335 is improved, thereby improving the performance of the electronic device 200.

In various embodiments of the present disclosure, mapping of data in the user space 1335 to the "Virtual" zone 1315 may be performed after determining whether or not to map the data to the virtual zone 1315 according to the memory determined in operation 503, which is illustrated above with reference to FIG. 5.

Zone information may include allocation information and statistical information. The allocation information may include the name of a zone, information indicating a memory associated with the zone, information indicating the start address of a memory space mapped with the zone, and information indicating the size of the zone. The statistical information may include information indicating the number of accesses to allocation and information indicating the number of accesses to release.

Zone information may be generated for each zone. That is, zone information may be generated for each of the "Normal" zone 1311, the "Virtual" zone 1315, and the "Highmem" zone 1317.

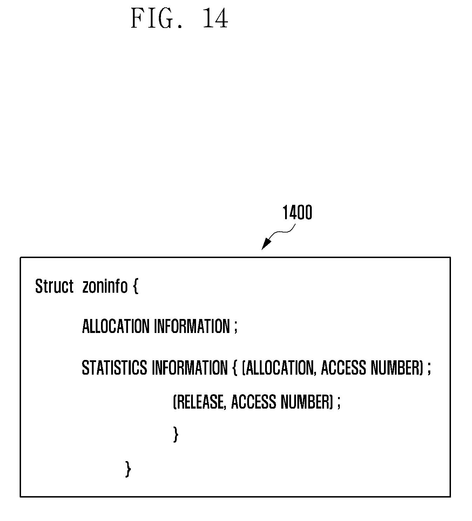

FIG. 14 is a diagram illustrating zone information according to various embodiments of the present disclosure.

Referring to FIG. 14, structure 1400 is an example of structure including fields that store zone information. The structure 1400 may include "allocation information," which is a field for storing allocation information, and "statistical information," which is a field for storing statistical information.

The electronic device 200 may generate parameters, which are defined in structure 1400, for each of the "Normal" zone 1311, the "Virtual" zone 1315, and the "Highmem" zone 1317 illustrated in FIG. 13 and may store zone configuration information, which is configured for each of the "Normal" zone 1311, the "Virtual" zone 1315, and the "Highmem" zone 1317 in each of the parameters.

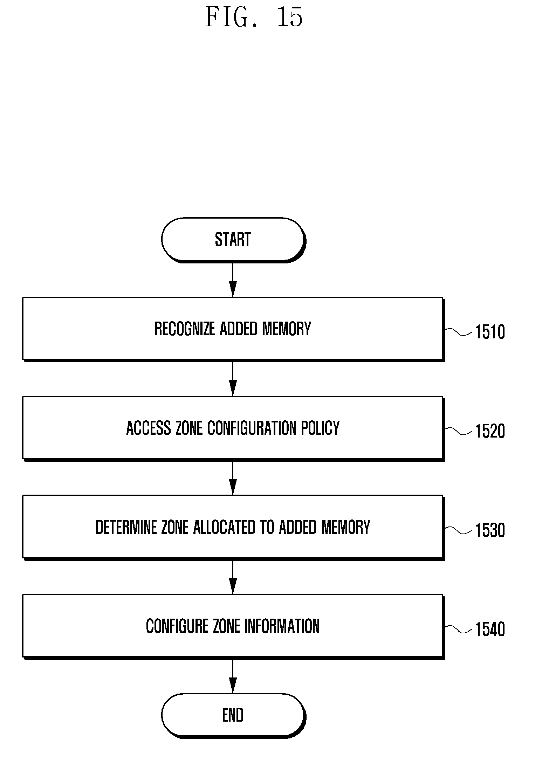

FIG. 15 is a flowchart for performing a zone setting method according to various embodiments of the present disclosure.

Referring to FIG. 15, the electronic device 200 may recognize an added memory in operation 1510. The electronic device 200, when memory is added, may recognize the added memory through hot plugging (hot insertion, hot swap). The electronic device 200 may retrieve memory information from the memory in operation 1510. The memory information may include at least one of information regarding the type, information regarding the capacity (size), and information regarding the data processing rate.

The electronic device 200 may access data, which indicates a zone configuration policy, in operation 1520. The zone configuration policy sets rules to configure a zone in an added memory. The zone configuration policy may be stored in a zone configuration policy table, and the electronic device 200 may access the zone configuration policy in the zone configuration policy table.

The electronic device 200 may determine a zone to be allocated to the added memory based on the data that indicates the zone configuration policy and information regarding the memory in operation 1530. In various embodiments of the present disclosure, the electronic device 200 may select a zone configuration policy from the zone configuration policy table based on the memory information and may determine a zone to be allocated to the memory based on the selected zone configuration policy.

In various embodiments of the present disclosure, the zone configuration policy may instruct a new zone to be allocated to the added memory.

In various embodiments of the present disclosure, the zone configuration policy may instruct a previously configured zone to be allocated to the added memory. In this case, the zone may be allocated both to the existing memory and to the added memory; alternatively, the zone may be allocated to the added memory, while a different zone may be re-allocated to the existing memory.

The electronic device 200 may configure zone information according to the result from in operation 1540. The electronic device 200 may configure zone information regarding a zone, which has been determined as a zone to be allocated to the added memory. The electronic device 200 may generate parameters, such as a structure 1400, and may store zone information in the parameters.

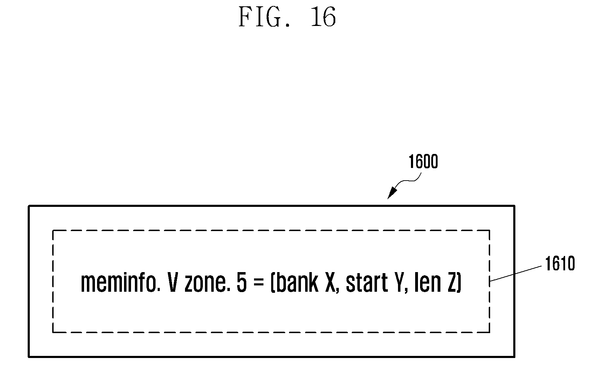

FIG. 16 is a diagram illustrating a zone configuration policy table according to various embodiments of the present disclosure.

Referring to FIG. 16, the zone configuration policy table 1600 includes a zone configuration policy 1610. The zone configuration policy 1610 instructs a zone named "V zone.5" to be allocated to an added memory.

The electronic device 200 accesses a zone configuration policy 1610 in the zone configuration polity table 1600, determines zone "V zone.5" as the zone allocated to the added memory based on the zone configuration policy 1610, and configures zone information regarding zone "V zone.5".

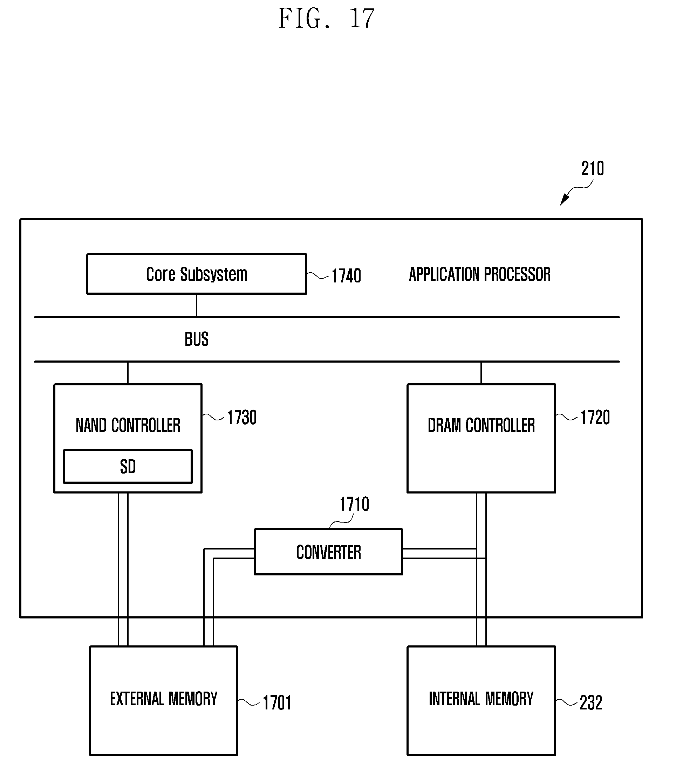

FIG. 17 is a block diagram illustrating the configuration of an application processor according to various embodiments of the present disclosure.

Referring to FIG. 17, the application processor 210 may include a converter 1710, a DRAM controller 1720, a NAND controller 1730, and a core subsystem 1740. The DRAM controller 1720 is connected to an internal memory 232 and the converter 1710, and the converter 1710 is connected to an external memory 1701. In this case, the external memory 1701 may be a high-speed external card, for example, R-Card. The external memory 230 illustrated in FIG. 2 may include the external memory 1701.

The DRAM controller 1720 may access data from the external memory 1701 via the converter 1710 and may store data in the internal memory 232 or the external memory 1701. The DRAM controller 1720 may directly access data from the internal memory 232 without the converter 1710, and may store data in the internal memory 232. The DRAM controller 1720, when an external memory 1701 is inserted into the electronic device 200, recognizes the inserted external memory 1701. In some embodiments, the memory added in operation 1510 may be the inserted external memory 1701 and, when an external memory 1701 is inserted into the electronic device 200, operations illustrated in FIG. 15 may occur.

The converter 1710 may convert between the DRAM interface and the external memory interface. That is, the converter 1710 makes the electronic device 200 recognize the external memory 1701 as a system memory. The converter 1710 may convert the interface with the internal memory 232 or the external memory 1701 and selectively provide the DRAM controller 1720 with data in the internal memory 232 and the external memory 1701 and may selectively store data, which has been received from the DRAM controller 1720, in the internal memory 232 and the external memory 1701.

The converter 1710 is advantageous in that it makes the electronic device 200 recognize an external memory (e.g., an R-Card) as a system memory, thereby preventing degradation of performance and life of existing NAND-based swap memories. The converter also removes the swap overhead, which exists in R-Card technology of the related art, thereby improving the system performance of the electronic device 200 and enabling all types of data of the electronic device 200 to be stored in the external. Further, the converter will increase the R-Card usage rate of the electronic device 200 because the converter facilitates expansion of memories of the electronic device 200; and minimizes the capacity of the internal memory of the electronic device 200. In this regard, the data type of the electronic device 200 may include at least one of an application code, application data, a page cache, driver data, operating system data, a sequential application code, a random application code, a sequential cache, a random cache, a private application code, a shared application code, private application data, and shared application data.

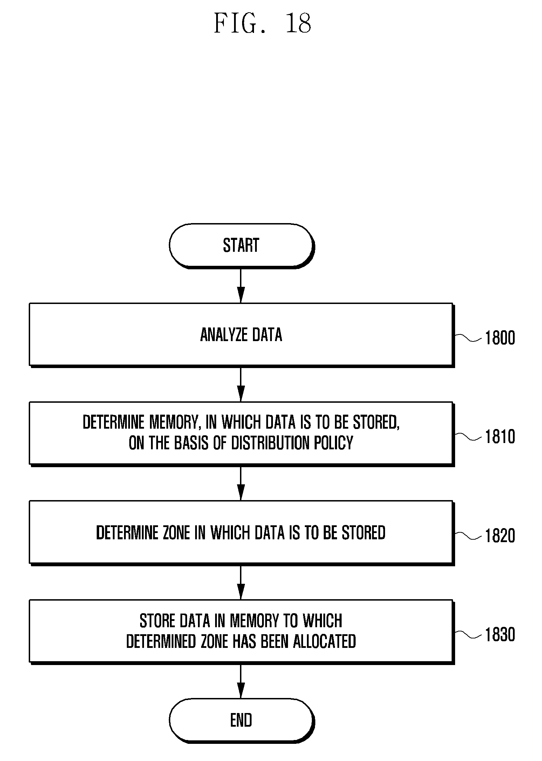

FIG. 18 is a flowchart for performing an electronic device memory management method according to various embodiments of the present disclosure.

Referring to FIG. 18, the electronic device 200, in operation 1800, may analyze the data to identify the type of data to be transmitted to the memory 230. For example, the type of data, which is loaded onto the memory 230 of the electronic device and operated, may be identified in operation 1800.

According to an embodiment of the present disclosure, a method for identifying the type of data by the memory manager in operation 1800 is to analyze the virtual address of the data, the metadata (additional information transferred together with the data) of the data, or factor information and the like, which are included in a software function call that has requested memory allocation.

According to an embodiment of the present disclosure, the electronic device 200, in operation 1800, may confirm whether the data requires a small initial setup time.

According to an embodiment of the present disclosure, the electronic device 200, in operation 1800, may confirm whether the data type requires a high throughput or a low throughput.

According to an embodiment of the present disclosure, the electronic device 200, in operation 1800, may confirm whether the data is of a private data type or a shared data type.

According to an embodiment of the present disclosure, the electronic device 200, in operation 1800, may confirm whether the data is of a sequential type or a random type.

According to an embodiment of the present disclosure, the electronic device 200, in operation 1800, may determine (select) a heterogeneous memory for storing data, according to the data type classification confirmed in operation 1800.

The distribution policy may be determined experimentally, for example. For example, when a better throughput is obtained by distributing specific data to the first memory 235 rather than to the second memory 236, the specific data may be distributed to the first memory 235. Conversely, when a better throughput is obtained by distributing specific data to the second memory 236 rather than to the first memory 235, the specific data may be distributed to the second memory 236.

The electronic device 200, in operation 1810, may determine at least one type of memory, in which a part or all of the data is to be stored based the result of analysis in operation 1800 and based on at least a part of a preset policy.

The electronic device 200, in operation 1810, may determine to distribute data, which requires a small initial setup time, to a second memory 236, which has memory characteristics that have a comparatively small initial setup time.

The electronic device 200, in operation 1810, may determine to store the private data in the first memory 235 and may determine to store the shared data in the second memory 236.

The electronic device 200, in operation 1810, may determine to store the sequential type data in the first memory 235 and may determine to store the random-type data in the second memory 236.

According to an embodiment of the present disclosure, the electronic device 200 may have at least one distribution policy. The multiple distribution policies may be applied independent of each other or to overlap each other. For example, the multiple distribution policies may be overlapped and reviewed sequentially according to priority.

It will be assumed, for example, that a system has applied a distribution policy based on "sequential/random I/O data classification" and a distribution policy based on "shared/static data classification" in an overlapping manner. In the case that data has both "shared" and "random" types, different memories 230 may be determined for respective distribution policies. In this case, the policy that "shared" data type is stored in the first memory may have a higher priority (weight) than the policy that "random" data type is stored in the second memory, and a final determination may be made to store the data in the first memory.

In an embodiment of the present disclosure, in the case of a data type that is both "sequential" and "is supposed to have a low initial setup time," the policy that "sequential" data is stored in the first memory may have a higher priority than the policy that data "that has a low initial setup time" is stored in the second memory, and a final determination may be made to store the data in the first memory.

Besides the cases described above as examples, there may be various embodiments with regard to various distribution policy combinations.

According to an embodiment of the present disclosure, the distribution policy applied to the electronic device 200 and its priority may be varied execution driving of the electronic device 200 according to the state of the electronic device 200.

According to an embodiment of the present disclosure, in connection with a method having multiple distribution policies, the electronic device 200 may include a distribution policy table, which is made up of a series of distribution policies. The electronic device 200 may refer to the distribution policy table and determine to which memory data will be distributed. The electronic device 200 may selectively apply at least one of distribution policies, which are described in the distribution policy table, to the system. In addition, the distribution policy table may include information regarding various distribution policy combinations or information regarding the priority (weight) according to the same. For example, the distribution policy table may include a definition regarding how a given data type will be classified with regard to the number of all cases of policy combinations.

The electronic device 200, in operation 1810, may selectively use a part or all of the four policies stored in the above-mentioned distribution policy table, given in Table 1. For example, the electronic device 200 may select Policy 2 (storing structure) and Policy 3 (sharing attribute) from Table 1 and use them in an overlapping manner. In such a case, with regard to data having both "shared" and "random" types, a memory determined on the basis of Policy 2 is the second memory, and a memory determined on the basis of Policy 3 is the first memory, which is different from the second memory.

The priority of Policy 3 is 1, and the priority of Policy 2 is 2 and, as such, Policy 3 has a high priority, and the electronic device 200 may finally determine to store the data in the first memory.

Furthermore, although the distribution policy has been described in the above embodiments based on two-way classification, there may be three or more heterogeneous memory devices 230, and the distribution policy and the distribution policy table may also be composed based on three-way classification, four-way classification, or a higher level of classification.

The electronic device 200, in operation 1820, may determine a zone to store the data according to the heterogeneous memory 230, which has been determined in operation 1810. The electronic device 200 may determine a zone, in which data is to be stored, according to the heterogeneous memory 230, which has been determined in operation 1810, by additionally using zone information configured in operation 1110 of FIG. 11 or zone information configured in operation 1540 of FIG. 15.

It will be assumed, for example, that a zone has been configured as illustrated in FIG. 13. That is, when a heterogeneous memory 230 determined in operation 1810 is the first memory 235, the electronic device 200 determines one of the "Normal" zone 1311 and "Virtual" zone 1315 as a zone, in which data is to be stored, in operation 1820. It will be assumed that a zone has been configured as illustrated in FIG. 13 such that, when a heterogeneous memory 230 determined in operation 1810 is the second memory 236, the electronic device 200 determines the "Highmem" zone 1317 as a zone, in which data is to be stored, in operation 1820.

The electronic device 200, in operation 1830, may store a part or all of data, which has been analyzed in operation 1800, in the memory, based on the zone determined in operation 1820. In this case, a part or all of the data may be stored in a memory space of the memory associated with the determined zone. It will be assumed, for example, that a zone has been configured as illustrated in FIG. 13. That is, when the "Virtual" zone 1315 has been determined in operation 1820 as the zone in to store the data, a part or all of data is stored in a memory space of the first memory 235 that is mapped with the "Virtual" zone 1315.

The "module" used in various embodiments of the present disclosure may refer to, for example, a "unit" including one of hardware, software, and firmware, or a combination of two or more of the hardware, software, and firmware. The "module" may be interchangeably used with a term, such as unit, logic, logical block, component, or circuit. The "module" may be the smallest unit of an integrated component or a part thereof. The "module" may be the smallest unit that performs one or more functions or a part thereof. The "module" may be mechanically or electronically implemented. For example, the "module" according to various embodiments of the present disclosure may include at least one of an application-specific IC (ASIC) chip, a field-programmable gate arrays (FPGAs), and a programmable-logic device for performing operations which have been known or are to be developed hereafter.

According to various embodiments of the present disclosure, at least a part of a device (for example, modules or functions thereof) or a method (for example, operations) according to the various embodiments of the present disclosure may be embodied by, for example, a command stored in a computer readable storage medium in a form of a programming module. When an instruction is implemented by one or more processors (for example, the processor 120), one or more processors may execute a function corresponding to the instruction. The computer-readable storage medium may be, for example, the memory 130. At least a part of the programming module may, for example, be implemented (e.g., executed) by the processor 210. At least a part of the programming module may include, for example, a module, a program, a routine, a set of instructions and/or a process for performing one or more functions.

The computer readable recording medium may include magnetic media such as a hard disc, a floppy disc, and a magnetic tape, optical media such as a compact disc ROM (CD-ROM) and a DVD, magneto-optical media such as a floptical disk, and hardware devices specifically configured to store and execute program commands, such as a ROM, a RAM, and a flash memory. In addition, the program instructions may include high class language codes, which can be executed in a computer by using an interpreter, as well as machine codes made by a compiler. The aforementioned hardware device may be configured to operate as one or more software modules in order to perform the operation of various embodiments of the present disclosure, and vice versa.

A module or a programming module according to the present disclosure may include at least one of the described component elements, a few of the component elements may be omitted, or additional component elements may be included. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added.

According to various embodiments of the present disclosure, a storage medium in which commands are stored is provided; the commands are set to perform, when executed by at least one processor, at least one operation by the at least one processor; and the at least one operation may include, in connection with a method for managing memories of an electronic device including a heterogeneous memory, operations of: anlyzing data; distributing the data to the heterogenous memory according to the data type; and storing the distributed data in the heterogeneous memory.

Some examples are defined by means of the following clauses.
1. A method of managing a memory of an electronic device, the method comprising:
   determining memory information associated with a first memory and a second memory; and
   configuring zone information for three or more zones to be allocated to the first memory and the second memory based on the memory information.
2. The method of clause 1, wherein the three or more zones comprise a first zone, which is a normal zone, a second zone allocated to the same memory as the first zone, and a third zone allocated to a different kind of memory from the memory.
3. The method of clause 1, further comprising:
   analyzing data to be stored;
   determining a memory to store a part or all of the data based on a type of a first memory, a type of the second memory, and a preset policy; and
   determining a zone to store a part or all of the data based on a result of the determination.
4. A method of managing a memory of an electronic device, the method comprising:
   recognizing an added memory inserted into the electronic device;
   accessing a zone configuration policy;
   determining a zone to be allocated to the added memory based on the zone configuration policy and memory information; and
   configuring zone information based on the determination.
5. The method of clause 3, wherein the zone information comprises information regarding three or more zones; and
   the three or more zones comprise a first zone, which is a normal zone, a second zone allocated to the same memory as the first zone, and a third zone allocated to a different kind of memory from the memory.
6. The method of clause 5, wherein the second zone or the third zone is allocated to the added memory.
43->7. An electronic device comprising:
   a first memory;
   a slot configured to receive a second memory; and
   a controller configured to:
   determine memory information associated with the first and second memories, and
   configure zone information regarding three or more zones to be allocated to the first and second memories based on the memory information.
8. The electronic device of clause 7, wherein the three or more zones comprise a first zone, which is a normal zone, a second zone allocated to the same memory as the first zone, and a third zone allocated to a different kind of memory from the memory.
9. The electronic device of clause 7, wherein the controller is configured to:
   analyze data to be stored;
   determine a memory to store a part or all of the data based on a type of a first memory, a type of the second memory, and a preset policy; and
   determine a zone to store a part of or all of the data based on a result of the determination.
10. An electronic device comprising:
   a first memory; and
   a controller configured to:
      recognize a second memory added to the electronic device,
      access a zone configuration policy,
      determine a zone to be allocated to the second memory based on the zone configuration policy and memory information, and
      configure zone information based on a result of the determination.
11. The electronic device of clause 10,
   wherein the zone information comprises information regarding three or more zones, and
   wherein the three or more zones comprise a first zone, which is a normal zone, a second zone allocated to the same memory as the first zone, and a third zone allocated to a different kind of memory from the memory.
12. The electronic device of clause 10, wherein the second zone or the third zone is allocated to the second memory.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of managing a memory of an electronic device, the method comprising:
analyzing data to be stored;
determining a memory to store a part or all of the data based on a type of a first memory, a type of a second memory, and a preset policy; and
storing a part or all of the data in the determined memory.

2. The method of claim 1, wherein the first memory and the second memory have different memory interfaces.

3. The method of claim 2, wherein the first memory includes a WIDE input/output (I/O) interface and the second memory includes a low power double data rate (LPDDR) interface.

4. The method of claim 2, wherein the first memory includes a WIDE I/O interface and the second memory includes a flash interface.

5. The method of claim 1, wherein the analyzing of the data comprises classifying types of the data.

6. The method of claim 5, wherein the classifying of the types of the data comprises classifying types of the data based on at least one of a usage of the data, a storing structure of the data, a sharing attribute of the data, a required amount of access of the data, and a required initial access rate of the data.

7. The method of claim 5, wherein the classifying types of the data comprises at least one of:
classifying types of the data into one of an application code, application data, a page cache, driver data, and operating system data based on usages of the data;
classifying types of the data into one of a sequential application code, a random application code, a sequential cache, and a random cache based on storing structures of the data;
classifying types of the data into one of a private application code, a shared application code, private application data, and shared application data based on sharing attributes of the data;
classifying types of the data into one of a sequential application code, a random application code, application data, a sequential cache, a page cache, a random cache, driver data, and operating system data based on usages of the data and storing structures of the data; and
classifying types of the data into one of a private application code, a shared application code, private application data, shared application data, a page cache, driver data, and operating system data based on usages of the data and sharing attributes of the data.

8. The method of claim 5, wherein the classifying of the types of the data comprises classifying types of the data into at least one of an application code, application data, a page cache, driver data, operating system data, a sequential application code, a random application code, a sequential cache, a random cache, a private application code, a shared application code, private application data, and shared application data.

9. The method of claim 1, wherein the preset policy comprises a policy instructing that, when the data type is one of driver data and operating system data, a high-speed memory among the first and second memories is determined as a memory in which a part or all of the data is to be stored and, when the data type is one of an application code, application data, and a page cache, a low-speed memory among the first and second memories is determined as a memory in which a part or all of the data is to be stored.

10. The method of claim 1, wherein the preset policy comprises a policy instructing that, when the data type is one of a shared application code and shared application data, a high-speed memory among the first and second memories is determined as a memory in which a part or all of the data is to be stored and, when the data type is one of a private application code and private application data, a low-speed memory among the memories is determined as a memory in which a part or all of the data is to be stored.

11. The method of claim 1, wherein the preset policy comprises a policy instructing that, when the data type is one of a sequential application code and a sequential cache, a high-speed memory among the first and second memories is determined as a memory in which a part or all of the data is to be stored and, when the data type is one of a random application code and a random cache, a low-speed memory among the first and second memories is determined as a memory in which a part or all of the data is to be stored.

12. The method of claim 1, wherein the preset policy comprises a plurality of policies.

13. The method of claim 12, wherein the plurality of policies are applied according to priority.

14. The method of claim 1, wherein the method further comprises determining a zone, in which at least a part of the data is to be stored, based on a type of the first memory and a type of the second memory, and the storing comprises storing the at least a part of the data in a memory space associated with the zone.

15. The method of claim 14, wherein the zone comprises a first zone, which is a normal zone, a second zone allocated to the same memory as the first zone, and a third zone allocated to a different kind of memory from the memory.

16. The method of claim 15, wherein the second zone is allocated during booting or operation of the electronic device.

17. The method of claim 1, wherein one of the first and second memories comprises an external memory implementing a universal flash storage (UFS) 2.0 standard.

18. The method of claim 1, wherein the data comprises at least one of data to be loaded from a storage device to the at least one kind of memory, data received by a communication module, data received by an interface, data sensed by a sensor module, data input by an input device, data taken by a camera module, data recorded by an audio module, data generated by an application, and data generated by an operating system.

19. An electronic device comprising:
a memory; and
a controller configured to:
analyze data to be stored,
determine a memory to store a part or all of the data based on a type of a first memory, a type of a second memory, and a preset policy, and
store a part or all of the data in the determined memory.

20. The electronic device of claim 19, wherein the first memory and the second memory have different memory interfaces.

21. The electronic device of claim 20, wherein the first memory includes a WIDE input/output (I/O) interface and the second memory includes a low power double data rate (LPDDR) interface.

22. The electronic device of claim20, wherein the first memory includes a WIDE I/O interface and the second memory includes a flash interface.

23. The electronic device of claim 19, wherein the controller is configured to classify types of the data.

24. The electronic device of claim 19, wherein the controller is configured to classify types of the data based on at least one of a usage of the data, a storing structure of the data, a sharing attribute of the data, a required amount of access of the data, and a required initial access rate of the data.

25. The electronic device of claim 19, wherein the controller is configured to perform at least one of:
classifying types of the data into one of an application code, application data, a page cache, driver data, and operating system data based on usages of the data;
classifying types of the data into one of a sequential application code, a random application code, a sequential cache, and a random cache based on storing structures of the data;
classifying types of the data into one of a private application code, a shared application code, private application data, and shared application data based on sharing attributes of the data;
classifying types of the data into one of a sequential application code, a random application code, application data, a sequential cache, a page cache, a random cache, driver data, and operating system data based on usages of the data and storing structures of the data; and
classifying types of the data into one of a private application code, a shared application code, private application data, shared application data, a page cache, driver data, and operating system data based on usages of the data and sharing attributes of the data.

26. The electronic device of claim 19, wherein the controller is configured to classify types of the data into at least one of an application code, application data, a page cache, driver data, operating system data, a sequential application code, a random application code, a sequential cache, a random cache, a private application code, a shared application code, private application data, and shared application data.

27. The electronic device of claim 19, wherein the preset policy comprises a policy instructing that, when the data type is one of driver data and operating system data, a high-speed memory among the first and second memories is determined as a memory in which a part or all of the data is to be stored and, when the data type is one of an application code, application data, and a page cache, a low-speed memory among the first and second memories is determined as a memory in which a part or all of the data is to be stored.

28. The electronic device of claim 19, wherein the preset policy comprises a policy instructing that, when the data type is one of a shared application code and shared application data, a high-speed memory among the first and second memories is determined as a memory in which a part or all of the data is to be stored and, when the data type is one of a private application code and private application data, a low-speed memory among the first and second memories is determined as a memory in which a part or all of the data is to be stored.

29. The electronic device of claim 19, wherein the preset policy comprises a policy instructing that, when the data type is one of a sequential application code and a sequential cache, a high-speed memory among the first and second memories is determined as a memory in which a part or all of the data is to be stored and, when the data type is one of a random application code and a random cache, a low-speed memory among the first and second memories is determined as a memory in which a part or all of the data is to be stored.

30. The electronic device of claim 19, wherein the preset policy comprises a plurality of policies.

31. The electronic device of claim 30, wherein the plurality of policies are applied according to priority.

32. The electronic device of claim 19, wherein the controller is configured to:
determine a zone, in which at least a part of the data is to be stored, based on a type of the first memory and a type of the second memory, and
perform control such that at least a part of data is stored in a memory space associated with the zone.

33. The electronic device of claim 32, wherein the zone comprises a first zone, which is a normal zone, a second zone allocated to the same memory as the first zone, and a third zone allocated to a different kind of memory from the memory.

34. The electronic device of claim 33, wherein the electronic device is configured to allocate the second zone during booting or operation of the electronic device.

35. The electronic device of claim 19, wherein the controller is configured to:
check an external memory inserted into the electronic device, and
select the external memory as one of the first memory and the second memory.

36. The electronic device of claim 19, wherein the data comprises at least one of data to be loaded from a storage device to the at least one kind of memory, data received by a communication module, data received by an interface, data sensed by a sensor module, data input by an input device, data taken by a camera module, data recorded by an audio module, data generated by an application, and data generated by an operating system.
